(19) Europäisches Patentamt
European Patent Office
Office européen des brevets

(11) **EP 4 764 975 A1**

(12) **EUROPEAN PATENT APPLICATION**

(43) Date of publication:
**24.06.2026 Bulletin 2026/26**

(21) Application number: **24307287.3**

(22) Date of filing: **23.12.2024**

(51) International Patent Classification (IPC):
**G06N 10/40** $^{(2022.01)}$     **G06N 10/70** $^{(2022.01)}$

(52) Cooperative Patent Classification (CPC):
**G06N 10/40; G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventors:
• **BANYS, Danielius**
**75015 Paris (FR)**

• **RAUTSCHKE, Felix**
**75015 Paris (FR)**
• **COTTET, Nathanaël**
**75015 Paris (FR)**
• **LESCANNE, Raphaël**
**75015 Paris (FR)**
• **MIKLASS, Salim**
**75015 Paris (FR)**

(74) Representative: **Atout PI Laplace**
**Immeuble Up On**
**25 Boulevard Romain Rolland**
**CS 40072**
**75685 Paris Cedex 14 (FR)**

(54) **A QUANTUM SYSTEM FOR STABILIZING A CAT QUBIT**

(57)     Non-linear superconducting circuit for stabilizing at least one cat qubit, the non-linear superconducting circuit comprising: a four-wave mixing non-linear element (7); a first resonant portion (29); and a second resonant portion (31) which is coupled to the first resonant portion via the four-wave mixing non-linear element; wherein the first resonant portion, the second resonant portion, and the four-wave mixing non-linear element are configured together to provide a first physical oscillatory mode (a) with a first resonant frequency for hosting a cat qubit and a second physical oscillatory mode (b) with a second resonant frequency which is more dissipative than the first physical oscillatory mode (a); and wherein at least one of the first and second resonant portions comprises a tunable inductor (8) and a capacitor (43,39) such that at least one of the first and second resonant frequencies are tunable with the inductance of the tunable inductor.

**Fig. 12**

EP 4 764 975 A1

**Description**

FIELD OF THE INVENTION

The invention concerns a quantum system for stabilizing one or more cat qubits, and in particular a quantum system comprising tunable resonators used to stabilize one or more cat qubits.

BACKGROUND

Stabilized cat qubits, which are bosonic code qubits defined by a quantum manifold spanned by the superposition of two or more coherent states (and which can be hosted in superconducting resonators), benefit from a noise bias, where bit-flip errors are exponentially suppressed with the average number of bosons (normally photons) in the so-called Schrödinger cat states hosted in a resonator. This suppression is effective for a wide range of physical noise processes, including photon loss, thermal excitations, photon dephasing, and nonlinearities from Josephson junctions.

The possibility of realizing such a qubit has been demonstrated by Lescanne, Raphaël, et al. "Exponential suppression of bit-flips in a qubit encoded in an oscillator." Nature Physics 16.5 (2020): 509-513. Such dissipatively stabilized cat qubits rely on a mechanism that dissipates photons in pairs. This process pins down two coherent states to separate locations in phase space. By increasing this separation, an exponential decrease of the bit-flip rate was observed experimentally while only linearly increasing the phase-flip rate. As a result, stabilized cat qubits were demonstrated to benefit from a high noise bias, which means that the bit-flip probability is exponentially smaller than the phase-flip probability. Specifically, this was achieved by using an asymmetrical threaded superconducting quantum interference device ("ATS") as a four-wave mixing non-linear element to engineer the 2-to-1 photon conversion between a memory mode and a highly dissipative buffer mode.

Subsequent experimental realizations include: (i) Berdou, Camille, et al. "One hundred second bit-flip time in a two-photon dissipative oscillator." PRX Quantum 4.2 (2023): 020350 ; (ii) Réglade, Ulysse, et al. "Quantum control of a cat qubit with bit-flip times exceeding ten seconds." Nature (2024): 1-6; (iii) Putterman, Harald, et al. "Preserving phase coherence and linearity in cat qubits with exponential bit-flip suppression." arXiv preprint arXiv:2409.17556 (2024); (iv) Putterman, Harald, et al. "Hardware-efficient quantum error correction using concatenated bosonic qubits." arXiv preprint arXiv:2409.13025 (2024).

Each of these realisations use fixed-frequency memory (or "storage") and buffer resonators. This is because the systems are highly sensitive to additional non-linearities which degrade the lifetimes of the memory mode. Thus, in particular, for the memory mode, it has previously been desired to maintain as clean or pure (namely linear) resonators as possible. This is particularly exemplified in Putterman, Harald, et al. "Preserving phase coherence and linearity in cat qubits with exponential bit-flip suppression." arXiv preprint arXiv:2409.17556 (2024), which discloses exquisite design of geometrical inductances in the side branches of the ATS to reduce the self-Kerr nonlinearity inherited by the fixed-frequency "storage" mode.

However still, due to inherent imperfections arising from fabrication processes of such resonators, the natural resonant frequencies of the memory and buffer modes may be shifted from the desired designed frequencies. As a result, the frequencies of the required parametric pumps and drives to be applied to the system for stabilizing and manipulating cat qubits will correspondingly also need to be shifted, and thus may inadvertently turn on other undesired spurious parametric processes, as described for instance in. Once fabricated, such pump-induced parametric processes may inadvertently fall within the regime of functionality of the device, i.e. by being shifted to such an extent as to avoid filtering.

Moreover, in a quantum processor comprising many memory and buffer resonators for stabilizing many cat qubits, it is known to design the memory resonators and the buffer resonators at different frequencies to avoid resonances therebetween and the accompanying strongly induced couplings, a problem known to as "frequency crowding". However, as the number of resonators increases, so too does the constraints in fabricating the resonators at the designed frequencies, and thus the difficulty in avoiding frequency collisions increases.

This invention aims to address one or more of the aforementioned problems to provide an improved method of characterizing a quantum system.

SUMMARY

In a first aspect, there is provided a non-linear superconducting circuit for stabilizing at least one cat qubit, the non-linear superconducting circuit comprising: a four-wave mixing non-linear element; a first resonant portion; and a second resonant portion which is coupled to the first resonant portion via the four-wave mixing non-linear element. The first resonant portion, the second resonant portion, and the four-wave mixing non-linear element are configured together to provide a first physical oscillatory mode (a) with a first resonant frequency for hosting a cat qubit and a second physical oscillatory mode (b) with a second resonant frequency which is more dissipative than the first physical oscillatory mode (a);

and wherein at least one of the first and second resonant portions comprises a tunable inductor and a capacitor such that at least one of the first and second resonant frequencies are tunable with the inductance of the tunable inductor.

By including the tunable inductor as part of at least one of the first and second resonant portions, the present Inventors have discovered that the resonant frequency of at least one of the first and second physical oscillatory modes can be tuned *in-situ* with minimal addition of non-linearity to the tuned physical oscillatory, without relying on the four-wave mixing non-linear element so as to avoid impacting on the non-linear mixing processes induced by the four-wave micing non-linear element. The present Inventors have discovered that this further reduces problems of frequency crowding, facilitating avoidance of accidental resonances with pump-activated parametric interactions when the four-wave mixing element is parametrically activated (such as pumped). The present invention further enables changing the first and/or second resonant frequencies involved in stabilizing the bosonic qubit between a first regime wherein the stabilized bosonic qubit is idle and a second regime wherein the stabilized bosonic qubit undergoes some operation, which may improve the fidelity of the operation.

As will be appreciated, the first resonant portion, the second resonant portion, and the four-wave mixing non-linear element are configured together to provide a first physical oscillatory mode (a) with a first resonant frequency for hosting a cat qubit which is substantially hosted by the first resonant portion. Similarly, the second physical oscillatory mode (b) is substantially hosted by the second resonant portion, although some of the modes participate in the non-linear element such that non-linear wave mixing is enabled between the modes, mediated by the non-linear element.

It is understood that the embodiments described herein comprising the tunable inductor is configured to induce less than 1 MHz or Kerr non-linearity to the first resonant portion over the frequency range at which said at least one of the first and second resonant frequencies is tunable with the inductance of the tunable inductor.

The four-wave mixing element may be one of: an asymmetrically threaded superconducting quantum interference device (ATS) or a DC-voltage-biased non-linear element.

DC-voltage-biased non-linear element can be a DC-voltage-biased single Josephson junction, or a plurality of DC-voltage-biased Josephson junctions...

The ATS can be galvanically coupled of either of the resonant portions, or capacitively coupled to either of the resonant portions, and/or may be integrated with the second resonant portion as an inductance of said resonant portion.

The tunable inductor may comprise two or more superconducting quantum interference devices (SQUIDs) connected in series, optionally wherein each of the SQUIDS is a DC-SQUID comprised of a pair of Josephson junctions connected in parallel, wherein the Josephson energy of the pair of Josephson junctions is asymmetrical, and preferably wherein the energy asymmetry between the asymmetrical Josephson energies of the pair of Josephson junctions is greater than 50%, calculated from the difference between Josephson energies divided by the larger Josephson energy.

Preferably, wherein the energy asymmetry is greater than 80%, for instance between 100% and 200%.

The number of SQUIDS may be greater than three, such as between three and ten, or even greater than ten, such as between ten and twenty.

The Josephson energy of the pair of Josephson junctions of a DC-SQUID being asymmetrical means that the Josephson energy of one of the Josephson junctions of the pair is different to the Josephson energy of the other of the Josephson junctions of the pair. Alternatively, Josephson energy of the pair of Josephson junctions of a DC-SQUID may be symmetrical, in that the Josephson energy of one of the Josephson junctions of the pair is substantially equal to the Josephson energy of the other of the Josephson junctions of the pair.

Preferably, the Josephson energy of the pair of Josephson junctions of each DC-SQUID is asymmetrical (termed asymmetrical DC-SQUID) as this permits a smooth frequency tunability as a function of magnetic flux threading each DC-SQUID, in particular as the frequency response of an asymmetrical DC-SQUID does not diverge at $\pi/2$ flux threading the DC-SQUID (in units of the magnetic flux quanta). Thus, by providing one or more asymmetrical DC-SQUIDs, the tunable inductor is less sensitive to flux noise.

Preferably, the SQUIDs are substantially identical to each other.

The SQUIDS may each be an RF-SQUID (formed from a single Josephson junction in a conducting loop), and preferably wherein the Josephson energies of the single Josephson junctions of each of the RF-SQUIDs is substantially identical to each other.

In embodiments, the SQUIDs connected in series may comprise both one or more DC-SQUID(s) and one or more RF-SQUID(s), wherein each of the DC-SQUID(s) may comprise the features described above in the embodiments comprising DC-SQUID(s), and wherein each of the RF-SQUID(s) may comprise the features described above in the embodiments comprising RF-SQUID(s).

Alternatively or additionally, the tunable inductor may comprise two or more superconducting nonlinear asymmetric inductive element (SNAILs) connected in series.

The tunable inductor may comprise five or more superconducting quantum interference devices (SQUIDs) connected in series.

Each SQUID may comprise an area delimited by the conducting loop of the SQUID, wherein the area is between 50 micrometer$^2$ to 500 micrometer$^2$.

The present Inventors have discovered that making the SQUID areas smaller than 500 micrometer$^2$ advantageously reduces the susceptibility of the SQUID to flux noise, whilst still enabling a reasonable tunability of in frequency of the tunable inductor. In particular, for cat qubits, the present Inventors have discovered that the optimal area balancing tunability with flux noise is between 50 micrometer$^2$ to 500 micrometer$^2$, and most preferably between up to 200 micrometer$^2$, such as between 100 micrometer$^2$ and 200 micrometer$^2$.

The non-linear superconducting circuit may comprise a first flux line, wherein the first flux line is configured to conduct a direct current adjacent to the SQUIDs so as to thread substantially the same value of magnetic flux through each of the SQUIDs, and optionally wherein: (i) the closest portion of the first flux line to the SQUIDs is positioned at a distance of between 1 micrometers and 20 micrometers from the SQUIDs; and/or (ii) the first flux line and the SQUIDS have a mutual inductance M of between 0.1 and 3 pH.

Preferably, the closest portion of the first flux line to the SQUIDs is positioned at a distance of between 5 micrometers and 10 micrometers from the SQUIDs. Preferably, the first flux line and the SQUIDS have a mutual inductance M of less than 1 pH, such as between 0.3 and 0.6 pH, and most preferably between 0.4 and 0.55 pH.

The present Inventors have discovered that threading the same value of magnetic flux through each of the SQUIDs enables the tunability of the tunable inductor whilst minimizing the non-linearity inherited from the SQUIDs. Moreover, the present Inventors have discovered that a single flux line may be used to do so in a simple and compact manner, thereby improving hardware efficiency.

In embodiments wherein the closest portion of the first flux line to the SQUIDs is positioned at a distance of between 1 micrometers and 20 micrometers from the SQUIDs and/or the first flux line and the SQUIDS have a mutual inductance M of between 0.1 and 1 pH the present Inventors have discovered that the quality of the mode associated with the resonant portion comprising the tunable inductor is not significantly degraded. In particular, and especially with the area of each of the SQUIDS being smaller than 500 micrometer$^2$, the present Inventors have discovered that the non-linear superconducting circuit is suitable for stabilizing high quality cat qubits, namely cat states which exhibit particularly long bit flip times. In particular, the present Inventors have discovered that the tunable inductor having these features may induce less than 0.5 MHz of Kerr non-linearity to the first resonant frequency over the frequency range at which said at least one of the first and second resonant frequencies is tunable with the inductance of the tunable inductor.

In embodiments described herein, said at least one of the first and second resonant frequencies which is tunable with the inductance of the tunable inductor, is tunable over a frequency range (given as the difference between a minimum frequency and a maximum frequency) of at least 0.5 GHz between the minimum frequency and the maximum frequency. For instance, the tunable frequency range may be at most 4 GHz, preferably less than 2 GHz, and most preferably less than 1.5 GHz. In particular, the present Inventors have discovered that configuring the superconducting non-linear superconducting circuit such that the first resonant frequency is between 1 GHz and 8 GHz, and preferably between 4 GHz and 8 GHz, and further configuring the ability to tune the frequency of the first resonant frequency over a range of between 0.5 GHz and 2 GHz, may facilitate avoiding the aforementioned problems such as frequency crowding.

The tunable inductor may further comprise one or more Josephson junctions connected in series with the SQUIDs, optionally wherein: (i) one or more Josephson junctions are connected in series between at least one pair of the SQUIDs which are adjacent; and/or (ii) one or more Josephson junctions are provided as a linear array.

The plurality of Josephson junctions of the linear array may be connected in series with no other element connected between adjacent Josephson junctions of the array other than a linear conducting portion. By linear conducting portion, it is understood to not mean necessarily geometrically linear (as in not necessarily a straight line), rather the linear conducting portion is a portion of electrically conducting material which enables electrical current to flow therethrough in a linear (as opposed to non-linear) manner.

The tunable inductor may thus be comprised of the SQUIDs connected in series forming a SQUID array and the linear array of Josephson junctions adjacent to the SQUID array and connected in series with the SQUID array.

Alternatively, the tunable inductor may comprise a tunable geometrical inductor.

The non-linear superconducting circuit may lie on a dielectric substrate and electrically conducting portions of the non-linear superconducting circuit are spatially isolated from a common ground plane by spacings formed by exposed portions of the dielectric substrate that spatially separate the electrically conducting portions from the common ground plane; wherein for the at least one of the resonant portions which comprises the tunable inductor and the capacitor, said resonant portion is comprised of: (i) an electrically conducting portion in the form of a single island conducting pad which, together with the common ground plane, provides the capacitor; and (ii) the tunable inductor galvanically connected to the single island conducting pad.

The present Inventors have discovered that a single island is compact ad simple design for providing a resonant portion, particularly suitable for stabilizing cat qubits via a dissipative stabilization scheme.

The single conducting pad may be galvanically, capacitively, or inductively coupled with the four-wave mixing non-linear element. Preferably, said single conducting pad is galvanically connected to the four-wave mixing non-linear element, as this advantageously increases the participating of the physical oscillatory mode associated with the resonant portion comprising the single conducting pad with the four-wave mixing non-linear element, thereby increasing the strength of the induced non-linear interaction (such as the 2-to-1 boson exchange, most preferably when the four-wave mixing non-linear element is an ATS).

The single island conducting pad may be a coplanar waveguide, defined by a line-like electrically conducting portion spatially isolated from the common ground plane such that the outer ground planes of the coplanar waveguide is provided by the common ground plane, wherein the line-like electrically conducting optionally comprises one or more turns. This has been found to be particularly advantageous in minimizing the spatial footprint of the line-like coplanar waveguide on a chip comprising the non-linear superconducting circuit, and moreover facilitates providing capacitive or inductive couplings with the line-like coplanar waveguide to other electrically conducting portions of the non-linear superconducting circuit (such as capacitive couplings at the distal ends of the line-like coplanar waveguide to other resonator portions).

The non-linear superconducting circuit may lie on a dielectric substrate and electrically conducting portions of the non-linear superconducting circuit are spatially isolated from a common ground plane by spacings formed by exposed portions of the dielectric substrate that spatially separate the electrically conducting portions from the common ground plane; wherein for the at least one of the resonant portions which comprises the tunable inductor and the capacitor, said resonant portion is comprised of: (i) a differential resonator comprising a pair of electrically conducting portions in the form of adjacent conducting pads which together provides the capacitor; and (ii) the tunable inductor galvanically connected to at least one of the adjacent conducting pads.

The present Inventors have discovered that a differential resonator provides more design flexibility to fine-tune couplings between other electrically conducting portions of the non-linear superconducting circuit (e.g. by coupling one of adjacent conducting pads to a first electrically conducting portion, whilst coupling the other of the adjacent conducting pads a second, other electrically conducting portion). The present Inventors have discovered that a single island is compact ad simple design for providing a resonant portion, particularly suitable for stabilizing cat qubits via a dissipative stabilization scheme.

The tunable inductor may be galvanically connected to both of the adjacent conducting pads of the differential resonator.

One of the adjacent conducting pads of the differential resonator may be galvanically, capacitively, or inductively coupled with the four-wave mixing non-linear element. Preferably, said coupled adjacent conducting pad is galvanically connected to the four-wave mixing non-linear element, as this advantageously increases the participating of the physical oscillatory mode associated with the resonant portion comprising the differential resonator with the four-wave mixing non-linear element, thereby increasing the strength of the induced non-linear interaction (such as the 2-to-1 boson exchange, most preferably when the four-wave mixing non-linear element is an ATS).

More generally, in the above embodiments wherein the non-linear superconducting circuit lies on a dielectric substrate and electrically conducting portions are spatially isolated from the common ground plane by spacings, the electrically conducting portions are delimited from the common ground plane by exposed portions of the dielectric substrate. For instance, the superconducting material of the non-linear superconducting circuit may be disposed on the dielectric substrate in a substantially planar manner, with said spacings being gaps etched to expose the underlying dielectric substrate to define the electrically conducting portions and the (often varying) widths of the spacings between the electrically conducting portions and the surrounding common ground plane (the common ground plane also lying on the dielectric substrate).

In embodiments wherein each of the first resonant portion and the second resonant portion both comprise a respective tunable inductor and a capacitor, the first resonant portion may be comprised of the features described above in relation to the single island conducting pad and the second resonant portion may be comprised of the features described above in relation to the differential resonator, or vice versa. Of course, both the first and second resonant portions may be each comprised of the features described above in relation to the single island conducting pad or , both the first and second resonant portions may be each comprised of the features described above in relation to the differential resonator.

In embodiments, the tunable inductor is galvanically connected to or inductively coupled with the four-wave mixing non-linear element. Preferably, the tunable inductor is galvanically connected to the four-wave mixing non-linear element.

As will be appreciated, the common ground plane essentially provides a capacitor pad for certain ones of the electrically conducting portions, and moreover certain ones of the electrically conducting portions may be shunted to ground (e.g. via one or more Josephson junctions, or via the non-linear elements described herein, or even simply directly shorted to the common ground plane).

For instance, it may be beneficial to provide flux lines in the form of coplanar waveguides, wherein the outer ground planes of the coplanar waveguide is provided by said common ground plane. At least one distal end of the coplanar waveguide flux lines is connected to an electrical current source. Crucially, another distal end of the coplanar waveguide flux line, which is typically the distal end adjacent to the electrically conducting portion of the non-linear superconducting circuit which requires magnetic flux biasing (such as one or more SQUIDs, or an ATS), is directly shorted to the common ground plane such that the direct current flowing through the coplanar waveguide is able to flow (and thereby provide the threading magnetic field) and return to ground via the common ground plane thereby dissipating through the common ground plane to minimize spurious currents and unwanted cross-talks therefrom.

The present Inventors have recognized various arrangements of the resonant potions in relation to the common ground plane.

For instance, in embodiments wherein both the first and second portions are galvanically connected to the four-wave mixing non-linear element, then either: (i) both the first and second resonant portions are floating with respect to the common ground plane (namely, the electrically conducting portions thereof are spatially and electrically isolated from a common ground plane); or (ii) both the first and second resonant portions are shorted to the common ground plane (namely, both respectively comprise an electrically conducting portion which is galvanically connected to the common ground plane).

In embodiments wherein the four-wave mixing non-linear element is shorted to the common ground plane, and wherein both the first and second portions are galvanically connected to the four-wave mixing non-linear element, then both the first and second resonant portions are shorted to the common ground plane.

In embodiments wherein both the first and second portions are capacitively connected to the four-wave mixing non-linear element, then either: (i) both the first and second resonant portions are floating with respect to the common ground plane; (ii) both the first and second resonant portions are shorted to the common ground plane; or (iii) one of the first and second resonant portions is floating with respect to the common ground plane and the other of the first and second resonant portions is shorted to the common ground plane.

In embodiments wherein the four-wave mixing non-linear element is floating with respect to the common ground plane, then both the first and second resonant portions are floating with respect to the common ground plane.

Generally, in embodiments wherein one of the first and second resonant portions does not include a tunable inductor (herein a non-tunable resonant portion), then the non-tunable resonant portion may be comprised of: (I) an electrically conducting portion in the form of a single island conducting pad which, together with the common ground plane, provides a capacitor, and an inductor galvanically connected to the single island conducting pad or geometrically provided by the form of the single island conducting pad itself; or (II) a differential resonator comprising a pair of electrically conducting portions in the form of adjacent conducting pads which together provides the capacitor, and an inductor geometrically provided by the form of the adjacent conducting pads themselves or galvanically connected to at least one of the adjacent conducting pads.

In a particularly preferred embodiment, the resonant portion (which comprises the tunable inductor and the capacitor) comprises the differential resonator and the tunable inductor galvanically connected thereto as described in the above embodiments, and the non-tunable resonant portion comprises the differential resonator and the inductor as described in the above embodiments. The present Inventors have discovered that this arrangement is particularly advantageous in improving the single photon decay lifetime from the first "memory" resonant portion (and in particular if it is the first resonant portion which comprises the tunable inductor).

The first resonant portion comprises the tunable inductor and the capacitor such that the first resonant frequency is tunable with the inductance of the tunable inductor.

The second resonant portion may comprise the tunable inductor and the capacitor such that the second resonant frequency is tunable with the inductance of the tunable inductor.

The first resonant portion may comprise a first tunable inductor and a first capacitor such that the first resonant frequency is tunable with the inductance of the first tunable inductor; and wherein the second resonant portion comprises a second tunable inductor and a second capacitor such that the second resonant frequency is tunable with the inductance of the second tunable inductor; wherein the first resonant frequency is tunable independently from the second resonant frequency.

For the avoidance of doubt, the first tunable inductor may have one or more of the features of tunable inductor described in the above embodiments. Additionally or alternatively, the second tunable inductor may have one or more of the features of tunable inductor described in the above embodiments.

The non-linear superconducting circuit may further comprise: a third resonant portion; a fourth resonant portion which is coupled to the third resonant portion via either: (i) the four-wave mixing non-linear element, or (ii) another four-wave mixing non-linear element or a (2N+1)-wave mixing non-linear element; wherein the third resonant portion, the fourth resonant portion, and said non-linear element coupling the third and fourth resonant portions are configured together to provide a third physical oscillatory mode ($a_2$) with a third resonant frequency for hosting a cat qubit and a fourth physical oscillatory mode ($b_2$) with a fourth resonant frequency which is more dissipative than the third physical oscillatory mode ($a_2$); and wherein at least one of the third and fourth resonant portions comprises another tunable inductor and another capacitor such that at least one of the third and fourth resonant frequencies are tunable with the inductance of said another tunable inductor.

In a second aspect, there is provided a non-linear superconducting circuit for stabilizing at least one cat qubit, as described in any of the embodiments above, with the exception that the aforementioned four-wave mixing non-linear element (coupling the first and second resonant portions) is instead a (2N+1)-wave mixing non-linear element. Thus in embodiments of the second aspect, the bosonic qubit or qubits may be cat qubit(s) stabilized by a resonant dissipative stabilization.

The third resonant portion may comprise one or more of the features of the first resonant portion described in the above embodiments.

The fourth resonant portion may comprise one or more of the features of the second resonant portion described in the above embodiments

In embodiments, the fourth resonant portion is the same resonant portion as the second resonant portion. Said otherwise, the second resonant portion is "multiplexed", in that the non-linear superconducting circuit comprises the first resonant portion, the second resonant portion, and the third resonant portion, wherein the third resonant portion, the second resonant portion, and said non-linear element coupling the third and second resonant portions are configured together to provide a third physical oscillatory mode ($a_2$) with a third resonant frequency for hosting a cat qubit and a fourth physical oscillatory mode ($b_2$) with a fourth resonant frequency which is more dissipative than the third physical oscillatory mode ($a_2$). That is, the first and third resonant portions are "memory" resonators which are both coupled to the same second resonant portion which acts as a "buffer" resonator, and for instance may be used to dissipate photons in order to stabilize a cat qubit in the first resonant portion and another cat qubit in the third resonant portion.

Preferably, the fourth resonant portion is the same resonant portion as the second resonant portion and is coupled to both the first resonant portion and the third resonant portion by the same four-wave mixing non-linear element, which is an ATS.

In a particularly preferred embodiment, the first resonant portion and the third resonant portion are each a non-tunable resonant portion and configured so as to have different resonant frequencies, and the second resonant portion comprises the tunable inductor and the capacitor such that the second resonant frequency is tunable with the inductance of the tunable inductor.

In a third aspect, there is provided a quantum device, comprising a non-linear superconducting circuit according to the first aspect and any embodiments thereof or the second aspect and any embodiments thereof; and a command circuit configured to apply one or more control signal(s) to the non-linear superconducting circuit, configured to engineer a 2N-to-1 boson exchange between the first and second physical oscillatory modes mediated by the four-wave mixing non-linear element; wherein the command circuit is further configured to apply one or more control signal(s) to the tunable inductor such that at least one of the first and second resonant frequencies is tunable across a frequency range, optionally wherein the frequency range is at least 0.5 GHz.

In a fourth aspect, there is provided a quantum device, comprising: a non-linear superconducting circuit according to the first or second aspects, but further in embodiments comprising the third resonant portion and the fourth resonant portion. In such embodiments, the non-linear superconducting circuit may further comprise a coupling element, wherein at least one of first and second is coupled to at least one of the third and fourth by the coupling element; and a command circuit configured to apply: (i) one or more first control signal(s) to the non-linear superconducting circuit, configured to engineer a 2N-to-1 boson exchange between the first and second physical oscillatory modes mediated by the four-wave mixing non-linear element, such that a first cat qubit is stabilized in the first physical oscillatory mode; (ii) one or more second control signal(s) to the non-linear superconducting circuit, configured to engineer a 2N-to-1 boson exchange between the third and fourth physical oscillatory modes mediated by the four-wave mixing non-linear element, such that a second cat qubit is stabilized in the third physical oscillatory mode; and (iii) one or more third control signal(s) to the tunable inductor, such that, in combination with the first, second, and third control signal(s), the first and second cat qubits are stabilized at different frequencies.

The command circuit may be further configured to apply: (iv) one or more fourth control signal(s) to the non-linear superconducting circuit, configured to engineer an interaction between the first cat qubit and the second cat qubit mediated by the coupling element such that a multi-qubit quantum gate is applied to the first and second cat qubits, wherein at least one of the first and second cat qubits is stabilized at an initial frequency prior to applying the multi-qubit gate and is at an operation frequency, different to the initial frequency, during the application of the multi-qubit quantum gate.

In embodiments, at least one of the third and fourth resonant frequencies is tunable across a frequency range, optionally wherein the frequency range is at least 0.5 GHz.

The coupling element may be linear capacitive bus, for instance provided by a coplanar waveguide. Alternatively, the coupling element may be a non-linear coupler, for instance comprising a DC-SQUID and a capacitor so as to be flux-tunable with the magnetic flux threading the DC-SQUID. Preferably, the coupling element couples the first resonant portion to the third resonant portion.

The non-linear superconducting circuit of the quantum devices described above may have any of the features described in the above embodiments.

For instance, in embodiments the tunable inductor comprises two or more SQUIDs connected in series. In such embodiments, the one or more control signal(s) applied to the tunable inductor may be a magnetic flux bias to thread all SQUIDs with substantially the same magnetic flux to thereby change the inductance of the tunable inductor.

In a particularly preferred embodiment, the four-wave mixing non-linear element is an ATS, and the one or more (e.g. first) control signal(s) applied to the non-linear superconducting circuit comprises at least: (i) a first electromagnetic drive applied to the ATS and/or the second resonant portion at the second resonant frequency; and (ii) a second electromagnetic pump applied to the ATS at a frequency equal to the absolute magnitude of the difference between twice the first resonant frequency and the second resonant frequency, such that a cat qubit is dissipatively stabilized in the first physical oscillatory mode.

In embodiments, when the second resonant portion comprises a tunable inductor, the non-linear superconducting circuit may comprise a drive line capacitively coupled to the second resonant portion to apply the first electromagnetic drive to the second resonant portion, said capacitive coupling of the drive line may be configured to vary by less than 10% when the second resonant frequency varies across its entire frequency tunability range. This may yield a second resonant portion which is sufficiently lossy to stabilize cats at all flux points of operation.

Similarly, the one or more second control signal(s) applied to the non-linear superconducting circuit may comprises at least: (i) an electromagnetic drive applied to the ATS and/or the fourth resonant portion at the fourth resonant frequency; and (ii) an electromagnetic pump applied to the ATS at a frequency equal to the absolute magnitude of the difference between twice the third resonant frequency and the fourth resonant frequency, such that a cat qubit is dissipatively stabilized in the third physical oscillatory mode.

Thus, preferably the command circuit is configured to apply control signal(s) to stabilize first and second dissipatively stabilized cat qubits are at different frequencies; and/or to perform a multi-cat-qubit quantum gate to the first and second cat qubits, wherein at least one of the first and second cat qubits is stabilized at an initial frequency prior to applying the multi-cat-qubit quantum gate and is at an operation frequency, different to the initial frequency, during the application of the multi-cat-qubit quantum gate.

Alternatively, the cat qubits may be: Kerr cat qubits, TPE cat qubits, or combinations of Kerr cat qubits, TPE cat qubits, dissipative stabilized cat qubits, provided that one of the physical oscillatory modes is more dissipative than the physical oscillatory mode in which the cat qubit is stabilized.

As will be appreciated, the quantum device of any of the above aspects may be used in a quantum processor, wherein the quantum processor uses the quantum device to stabilize a plurality of cat qubits and manipulate the plurality of cat qubits to perform quantum logic operations.

For the avoidance of doubt, features which are described in the context of separate aspects and embodiments of the invention may be used together and/or be interchangeable. Similarly, features described in the context of a single embodiment may also be provided separately or in any suitable sub-combination.

BRIEF DESCRIPTION OF THE DRAWINGS

Various embodiments of the invention will now be described, by way of example only, and with reference to the accompanying drawings in which:

Figure 1 shows a diagram of a generic quantum system according to an embodiment of the invention;

Figure 2 shows components of a quantum system for stabilizing a cat qubit by implementing a parametric dissipative stabilization with an ATS, according to an embodiment of the invention;

Figure 3 shows components of a quantum system for stabilizing a cat qubit arranged to perform a DC dissipative stabilization of a cat qubit, according to an embodiment of the invention;

Figure 4 shows a partial electrical equivalent diagram of a galvanic example implementation of the quantum system of Figure 2;

Figure 5 illustrates a partial electrical equivalent diagram of a capacitive example implementation of the quantum system of Figure 2;

Figure 6 illustrates a partial electrical equivalent diagram of a galvanic example implementation of the quantum system of Figure 3;

Figure 7 illustrates a partial electrical equivalent diagram of a capacitive example implementation of the quantum system of Figure 3;

Figure 8 shows a physical circuit diagram of a quantum system to stabilizing and manipulating a plurality of cat qubits, according to an embodiment of the invention;

Figure 9 shows schematics of three different tunable inductors, according to an embodiment of the invention;

Figure 10 shows an example of an array of DC-SQUIDs connected in series which may be used in embodiments of the present invention;

Figure 11 shows an example of an array of DC-SQUIDs connected in series which may be used in embodiments of the present invention;

Figure 12 shows an example of a resonant portion comprising a tunable inductor which may be used in embodiments of the present invention;

Figure 13 shows an example of a resonant portion comprising a tunable inductor which may be used in embodiments of the present invention; and

Figure 14 shows an example of operations which may be applied by command circuit to the superconducting non-linear circuit, according to an embodiment of the invention.

## DETAILED DESCRIPTION

Herein, like features in different Figures can be identified by having the same reference numeral, and thus may only be described once in relation to one of the Figures.

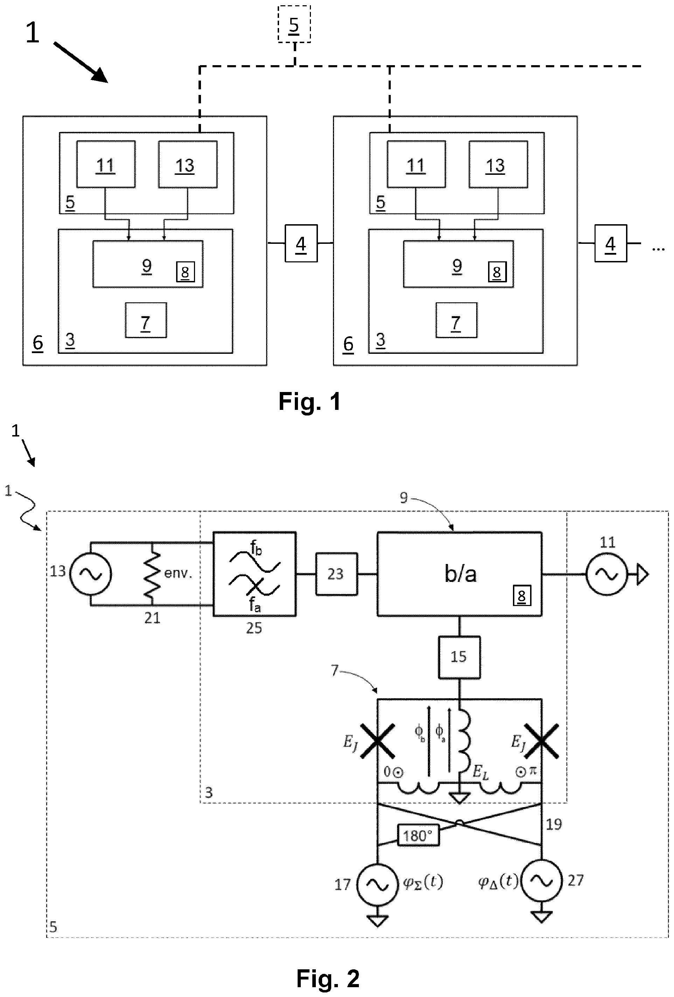

Figure 1 shows an exemplary quantum system 1 which is arranged to stabilize or host one or more cat qubits. The quantum system 1 comprises one or more cat qubit-hosting structures 6, each of which is configured to host or stabilize a cat qubit therein. Figure 1 shows two cat qubit-hosting structures 6 as an example, which are coupled to each other via a linear or non-linear coupler 4. As will be appreciated, there could instead be a single cat qubit-hosting structure 6 or there could be more than two.

Each qubit-hosting structure 6 has resonator structure 9 which is configured to host at least two physical oscillatory modes. In embodiments this could be a first physical oscillatory mode $a$ and a second physical oscillatory mode $b$. As will be understood, the oscillatory mode(s) could be any physical dynamical oscillation suitable for hosting a qubit, such as electromagnetic, magnonic (spin), phononic (acoustic), plasmonic etc. The resonator structure 9 is a physical structure configured to enable the physical oscillatory mode(s) to live and oscillate therein, such as a superconducting resonator in which electromagnetic wave(s) oscillate, a variety of electrodes and lasers configured to trap ions in potential wells defined thereby.

In particular, the resonator structure 9 comprises a first resonant portion and a second resonant portion, at least one of which being a superconducting resonator and comprising a tunable inductor 8, which will be described in more detail below.

Coupled to the resonator structure 9 there is a non-linear element 7, which couples the first resonant portion and the second resonant portion. Thus, the resonator structure 9 and the non-linear element 7 coupled thereto together thus provide a non-linear superconducting circuit 3.

Each qubit-hosting structure 6 also has one or more signal generator(s) 11,13 coupled to the resonator structure 9. In Figure 1, two signal generators are shown both coupled to the resonator structure 9, however there could be only a single signal generator, or more than two. Additionally or alternatively, one or more signal generator(s) could be coupled to the non-linear element 7. Regardless of which part of the non-linear circuit 3 they are coupled to, the one or more signal generator(s) 11, 13 are configured to physically prepare the quantum system 1 in a dynamical configuration by inputting control signals to the resonator structure 9 and/or the non-linear element 7.

Moreover, as will be appreciated, the specific form of the control signals will depend on the specific architecture of quantum system 1. For instance, as discussed more below, if the quantum system 1 is based on superconducting circuits, the control signals may be electromagnetic pulses and drives (in particular microwave radiation), or current biases, or DC voltage biases etc.

Figure 1 further shows that each qubit-hosting structure 6 comprises a command circuit 5, which includes a classical processor (i.e. conventional computer) configured to control the signal generator(s) 11,13 and receive the output from the detector 8. Of course, a single command circuit 5 may globally control all of the elements of the various structures of quantum system 1, such as all of the qubit-hosting structures 6 and the non-linear couplers 4 where appropriate, as indicated via the dashed lines in Figure 1.

The command circuit 5 is therefore not "quantum", but rather controls the elements such as the signal generator(s) and the detector which themselves may be coupled to or have some influence on the qubit states hosted in the one or more qubit-hosting structures 6. In this sense then, the command circuit 5 and the quantum system 1 may together be considered quantum characterization unit. The quantum characterization unit may itself be part of a quantum processor, a quantum communication system, or a quantum detection system, as the case may be according to the specific technical use the qubits are put to.

The quantum system 1 is configured to stabilize so-called cat-qubits, which typically face difficulties in swiftly and accurately extracting physical parameters which characterize the quantum system. A two-legged cat qubit is defined as a two-dimensional manifold spanned by the so-called cat states $|C_\alpha^{\pm}\rangle$ which are superpositions of two coherent states $|\alpha\rangle$

and $|-\alpha\rangle$: $|C_\alpha^{\pm}\rangle = N^{\pm}(|\alpha\rangle \pm |-\alpha\rangle)$, where $N^{\pm} = 1/\sqrt{2(1 \pm e^{-2|\alpha|^2})}$.

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\overline{n} = |\alpha|^2$ - of the Schrödinger cat states of the cat qubits. As previously mentioned, this exponential suppression of bit-flips is only at the cost of linear increase of phase-flips.

The cat qubits can be stabilized or confined by the following exemplary schemes:

(A) A parametric dissipative stabilization, with jump operator $L_2 = \sqrt{\kappa_2}(a^2 - \alpha^2)$, where $\kappa_2$ is the two-photon dissipation rate, *a* is the photon annihilation operator of the memory mode a and $\alpha$ is a complex number defining the cat qubit. This jump operator can be realized by coupling a lossy buffer mode b with dissipation rate $\kappa_b$, and a four-wave mixing non-linear element - typically a Josephson junction or an asymmetrically threaded SQUID (ATS) - to the memory mode a and by engineering the Hamiltonian $H/\hbar = g_2(a^2 - \alpha^2)b^\dagger + \mathrm{h.\,c.}$, where b is the photon annihilation operator of the buffer mode b and $g_2$ is the two-photon coupling rate, by applying to the four-wave mixing non-linear element a pump at frequency |2$f_a$ - $f_b$| and a drive of the buffer mode b at frequency $f_b$ provided $g_2 < \kappa_b$.

(B) A Kerr Hamiltonian $H/\hbar = \frac{K}{2}\left(a^{\dagger 2} - \alpha^2\right)\left(a^2 - \overline{\alpha^2}\right)$, where *K* is the amplitude of the Kerr Hamiltonian, *a* is the photon annihilation operator, and $|\alpha|^2$ is the mean photon number.

(C) A detuned Kerr Hamiltonian $H/\hbar = \frac{K}{2}\left(a^{\dagger 2} - \alpha^2\right)\left(a^2 - \overline{\alpha^2}\right) - \Delta a^\dagger a$, where *K* is the amplitude of the Kerr Hamiltonian, *a* is the photon annihilation operator, $\alpha$ is a complex number defining the cat qubit, and $\Delta$ is the detuning factor.

(D) A two-photon exchange (TPE) Hamiltonian $H/\hbar = g_2(a^2 - \alpha^2)\sigma_+ + \mathrm{h.\,c.}$, where $g_2$ is the complex two-photon coupling rate, *a* is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization (A).

(E) A dissipative squeezing stabilization, with jump operator $L_{SC} = \sqrt{\kappa_{SC}}\left(\left(\cosh(r)a + \sinh(r)e^{i\theta}a^\dagger\right)^2 - \alpha^2\right)$, where $\kappa_{SC}$ is the squeezed two-photon dissipation rate, *a* is the photon annihilation operator of the memory mode a, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing non-linear element - typically a Josephson junction or an ATS -, to the memory mode a and by engineering the Hamiltonian $H/\hbar = g_{SC}\left(\left(\cosh(r)a + \sinh(r)e^{i\theta}a^\dagger\right)^2 - \alpha^2\right)b^\dagger + \mathrm{h.\,c.}$, where b is the photon annihilation operator of the buffer mode b and $g_{SC}$ is the squeezed two-photon coupling rate, with several pumps at frequencies |2$f_a$ - $f_b$|, $f_b$ and 2$f_a$ + $f_b$, and a drive of the buffer mode b at frequency $f_b$ provided $g_{SC} < \kappa_b$.

(F) A variant of the previous stabilization scheme e), for which the Applicant filed the European patent application EP 23175147.0, in which a bosonic qubit - called *"moon cat qubit"* since the two blobs of the Wigner function have a crescent moon shape - is stabilized by engineering the Hamiltonian $H/\hbar = g_2(a^2 + \lambda a^\dagger a - \alpha^2)b^\dagger + \mathrm{h.\,c.}$, where $g_2$ is the amplitude of the two-photon coupling rate as described above achieved via a pump at frequency |2$f_a$ - $f_b$|, *a* is the annihilation operator of the memory mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and b is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda = 2\tanh(r)$.

(G) A DC dissipative stabilization, for which the Applicant filed the European patent application EP 23306839.4, in which a cat qubit is stabilized in the spirit of the previous stabilization scheme a), except that the two-photon pump that engineers the non-linear conversion between two photons of the memory mode a and one photon of the buffer mode b is replaced with a DC voltage source which biases a non-linear element formed exclusively of one or more Josephson junctions, such that the DC-biased non-linear element acts as a voltage-to-frequency converter which, at the appropriate voltage bias, provides the required parametric interaction at the frequency |2$f_a$ - $f_b$| necessary to achieve dissipative stabilization. In particular, the two-photon coupling rate $g_2$ is therefore not limited by the amplitude of the two-photon pump: $g_2 = \frac{E_J}{4}\varphi_a^2\varphi_b$, where $E_J$ is the Josephson energy of the one or more Josephson junctions, $\varphi_a$ is the zero-point fluctuation of the phase of the memory mode a, and $\varphi_b$ is the zero-point fluctuation of the phase of the buffer mode b.

(H) A resonant dissipative stabilization, for which the Applicant filed the European patent application EP 21306965.1, with jump operator $L_2 = \sqrt{\kappa_2}(a^2 - \alpha^2)$, where $\kappa_2$ is the two-photon dissipation rate, *a* is the photon annihilation operator of the memory mode a and $\alpha$ is a complex number defining the cat qubit. This jump operator can be realized by coupling a lossy buffer mode b with dissipation rate $\kappa_b$, and a three-wave mixing non-linear element to the memory mode a which engineers the Hamiltonian $H/\hbar = g_2(a^2 - \alpha^2)b^\dagger$ + h.c., where $b$ is the photon annihilation operator of the buffer mode b provided the mode frequencies verify substantially $2f_a = f_b$ and $g_2 < \kappa_b$ to which a drive of the buffer mode at frequency $f_b$ is added.

In the context of Figure 1, in embodiments wherein the quantum system 1 is for hosting a cat qubit via dissipative stabilization, the quantum circuit 3 may be a circuit fabricated out of superconducting material comprising of various resonators, transmission lines, capacitors, inductors, and Josephson junctions, and may be arranged to make possible three- or four-wave mixing between a first physical oscillatory mode a and a second physical oscillatory mode b.

In the following, the first physical oscillatory mode a is used as a memory hosting a cat qubit, while the second physical oscillatory mode b is used as a buffer in between the cat qubit and the external environment. Hereafter, the identifier "physical oscillatory" will be dropped when referring to modes.

The first mode a and the second mode b each correspond to natural resonant frequencies of the non-linear superconducting quantum circuit 3. Consequently, the first mode a and the second mode b each have a respective resonant frequency. The first mode a has a resonant frequency $f_a = \frac{\omega_a}{2\pi}$ and the second mode b has a resonant frequency $f_b = \frac{\omega_b}{2\pi}$, where $\omega_a$ and $\omega_b$ are the respective angular frequencies of the first mode a and the second mode b.

By "having" a first mode and a second mode, it should be understood here that the non-linear superconducting quantum circuit 3 comprises components operating in a superconducting regime which host the modes independently of each other or concurrently. In other words, the first mode a and the second mode b may be hosted in different subsets of components of the superconducting circuit or on the same subset of components.

According to the present invention, one or both of the first and second modes is configured to have a tunable frequency, which is controlled via the tunable inductor 8 discussed in more detail below.

The memory mode a has a high-quality factor $Q_a$ while the buffer mode b has a low-quality factor $Q_b$. As will be appreciated, the quality factor (Q-factor) can be determined in various ways, for instance by: (a) spectroscopic linewidth measurement, wherein the quality factor is given by $Q = f/\Delta f$, wherein $f$ is resonant frequency and $\Delta f$ is the spectroscopic linewidth; or (b) via a time-domain measurement wherein a tone is sent in, and a return signal is measured after a pre-determined time, wherein $Q = f \ast \tau$ with $\tau$ the characteristic decay time. Of course, the skilled person would be aware of various other methods for determining the quality factor of a particular mode.

The non-linear superconducting quantum circuit 3 is intended to be subject to electromagnetic radiation delivered by the command circuit 5 in order to engineer various non-linear interactions between the first mode a and the second mode b. The frequency of each electromagnetic radiation is tuned to select specific terms within the rotating wave approximation. Typically, for superconducting materials such as aluminium, the electromagnetic radiation used herein may be in the microwave regime.

Herein, the non-linear element 7 may be a four-wave mixing non-linear element, such as an ATS or Josephson junction suitable for parametric dissipative stabilization schemes such as scheme (A) above, or one or more Josephson junctions suitable for a DC dissipative stabilization scheme corresponding to scheme (G) above. More generally, the non-linear element may be configured to be a (2N+2)-wave mixing element (where N is a positive integer) so as to enable parametric dissipative stabilization of multi-legged (i.e. greater than 2) cat qubits, as described for instance in: Mirrahimi, Mazyar, et al. "Dynamically protected cat-qubits: a new paradigm for universal quantum computation." New Journal of Physics 16.4 (2014): 045014.

The non-linear element 7 can also be a three-wave mixing non-linear element, for example a superconducting non-linear asymmetric inductive element (SNAIL) or other three-wave mixing non-linear elements in the case of a resonant dissipative stabilization which corresponds to stabilization scheme (H) above. More generally, the non-linear element may be configured to be a (2N+1)-wave mixing element (where N is a positive interger) so as to enable resonant dissipative stabilization of multi-legged (i.e. greater than 2) cat qubits, as described for instance in: EP21306965 filed 31 December 2021.

The resonant structure 9 is arranged to be connected to the non-linear element 7 to provide the non-linear superconducting quantum circuit 3 with the first mode a and the second mode b having respective resonant frequencies $f_a$ and $f_b$. More particularly, the first mode a and the second mode b "participate" in the non-linear element 7, which means that a portion or the entirety of the mode magnetic energy is stored in the non-linear element 7. Such a participation can be quantified by the zero-point fluctuation of the superconducting phase across the non-linear element 7, noted $\varphi_a$ for the first mode a and $\varphi_b$ for the second mode b.

In the schematic diagram of the quantum system 1 illustrated in Figure 1, the resonant structure 9 is shown as a single rectangular box, however the non-linear superconducting quantum system 3 typically comprisesly two or more resonant portions to form the two electromagnetic modes, which act as a cat qubit "memory" mode and a buffer mode.

The first resonator potion may be provided by a 3D resonator, such as a cavity machined out of high purity aluminium (e.g. above 99.99% purity). Similarly, the second resonator portion may provided as an antenna-like cavity. Alternatively, the first and second resonator potions may be provided by a 2D resonator, such as a co-planar waveguide design. Some resonator portions may be 3D, some may be 2D. In either case, such superconducting resonators are considered electromagnetic resonators and the modes hosted therein are electromagnetic modes.

Although electromagnetic resonators are convenient for design and control purposes, the resonator portions need not necessarily be electromagnetic resonators. In particular, for the first resonator portion which hosts the cat qubit, it could be a nanomechanical resonator, such as phononic-crystal-defect resonators (PCDRs), similar to those described in P. Arrangoiz-Arriola, E. A. Wollack, Z. Wang, M. Pechal, W. Jiang, T. P. McKenna, J. D. Witmer, R. Van Laer, and A. H. Safavi-Naeini's work, "Resolving the energy levels of a nanomechanical oscillator," published in Nature 571, 537 (2019). These PCDRs are periodically patterned suspended nanostructures that support localized acoustic resonances in the gigahertz range. They are made from a piezoelectric material like LiNbO3, enabling the coupling of these resonances to superconducting circuits with nearly the same efficiency as standard electromagnetic cavities. Specifically, quasi-one-dimensional PCDRs made from lithium niobate, a piezoelectric crystalline material, could be used, with modes localized within a volume less than 1 $\mu$m3 of a suspended nanostructure.

In such acoustic resonators, the cat qubit is encoded in the phonons of the resonator.

Other types of acoustic resonators, such as acoustic membranes, also exist. The primary requirement is an acoustic-to-electromagnetic coupler, to couple the acoustic first resonator portion to the non-linear element 7.

Furthermore, other types of resonators may be used, such as a magnetic resonator wherein the quanta of oscillations are magnons (collective spin excitations). An example could be a designed yttrium-ion-garnet (YIG) particle, as described in Kounalakis, Marios, Gerrit EW Bauer, and Yaroslav M. Blanter. "Analog quantum control of magnonic cat states on a chip by a superconducting qubit." Physical review letters 129.3 (2022): 037205. Again, there is a requirement to couple magnetic first resonator portion to the non-linear element 7. Yet another type of resonator suitable for hosting cat qubits could be semiconductor double quantum dots embedded in a cavity such as a split-ring resonator cavity as disclosed in Kozin, Valerii K., et al. "Quantum phase transitions and cat states in cavity-coupled quantum dots." Physical review research 6.3 (2024): 033188.

Thus, herein a cat qubit may be encoded in the bosons of the resonator. Herein, for the sake of simplification, the 2-to-1 boson exchange (or indeed 2N boson exchange with the memory mode) is a 2-to-1 photon exchange (2N photon exchange with the memory mode), however it will be appreciated that all reference to photons and photon exchange regarding the first mode which hosts the cat qubit can be replaced with bosons or boson exchange (e.g. acoustic phonons, or magnons, or indeed plasmons).

Typically, the most preferred architecture is configured to have a 4-wave mixing non-linear element coupling first and second superconducting resonant portions, and is configured to engineer a 2-to-1 photon between the memory mode hosted in the first resonant portion and the buffer mode hosted in the second resonant portion.

The command circuit 5 is arranged to deliver control signals, such as electromagnetic radiation of DC voltage biases. To this end, as illustrated in figure 1, the command circuit 5 comprises signal generators in the form of at least a first mode drive 11 and a second mode drive 13. For instance, the command circuit 5 may be arranged at least to drive the second mode b by delivering radiation at a frequency substantially equal to the second resonant frequency $f_b$ to the resonant portion 9.

By "a frequency substantially equal to", it should be understood that, ideally, the frequency is exactly equal to the desired value. However, in practice, the frequency value deviates from the desired value, typically by 1 or even 5%, due to the inherent precision of the hardware used.

Moreover, as will be understood, the frequency of a mode may be shifted in use. For instance, under certain dynamical interactions such as application of an electromagnetic pump to the resonant portion 9, the frequencies of the first mode a and the second mode b may be effectively shifted (e.g. Stark shifted) due to the presence of a static potential or dynamical interaction. However, the skilled person would be well aware of characterising such effective frequencies, and for simplicity herein, by the first mode a and the second mode b "having" respective resonant frequencies $f_a$ and $f_b$, it will be understood as static meaning "un-dressed" frequencies or shifted "dressed" frequencies when in the presence of a dynamical interaction, depending on the situation.

Figure 2 illustrates an embodiment in which a single qubit-hosting structure 6 is arranged to perform the parametric dissipative stabilization to stabilize a cat qubit (i.e. a cat-qubit-hosting structure 6), wherein the non-linear element 7 is an ATS. An ATS is an inductive dipole element formed by a pair of Josephson junctions (indicated by the crosses and $E_J$ label in Figure 2) being shunted by an inductance (indicated by the $E_L$ label in Figure 2). The inductance may be formed for instance from a linear array of Josephon junctions. The Josephson junctions are each arranged on a different superconducting path such that they each form a distinct loop with the inductance, such that the ATS can be viewed as two superconducting loops connected by the shared edge which comprises the inductance. The ATS is thus sensitive to the magnetic flux threaded through each of the two loops.

The resonator structure 9 is coupled via a linear coupler 15 to the ATS 7 which acts as an inductive element, such that the first mode a and the second mode b participate in the ATS 7. Example of embodiments for the linear networks which form the first and second resonant portions of the resonator structure 9 are known. For instance, among these embodiments, the non-linear superconducting quantum circuit 3 can be a two-mode hybridized system (also known as "galvanic cat", for which the Applicant has filed patent application EP22306815.6 and EP22306816.4) for which two lumped modes couple strongly via the ATS.

It is known to the skilled person that an ATS can be used to engineer in general a 2-to-1 boson conversion, i.e. the first term $a^2$ of the jump operator $L_2^\alpha$, in order to perform a parametric dissipative stabilization More particularly, a 2-to-1 photon conversion between the first mode a and the second mode b is obtained by parametrically pumping the ATS at the frequency $f_p = |2f_a - f_b|$, as successfully shown by Lescanne, Raphaël, et al. "Exponential suppression of bit-flips in a qubit encoded in an oscillator." Nature Physics 16.5 (2020): 509-513. Advantageously, the pump frequency satisfies $f_p \gg g_2$ to make this parametric pumping work as well as possible.

It is known to the skilled person that, in the case of the non-linear element 7 being an ATS 7, when biased at its flux working point also known as the "saddle point" ($0 - \pi$, namely 0 flux threaded through one of the loops and $\pi$ flux in unit of the flux quantum threaded through the other of the loops), the Hamiltonian of the ATS 7 has the following "sin-sin" form:

$$H_{ATS} = -2E_J \sin\big(\varphi_\Sigma(t)\big)\sin(\varphi) + \frac{E_L}{2}\big(\varphi - \varphi_\Delta(t)\big)^2,$$

where $\varphi = \varphi_a(a + a^\dagger) + \varphi_b(b + b^\dagger)$ is the total superconducting phase difference across the ATS 7, $\varphi_a$ is the zero-point fluctuation of the phase of the first mode a across the ATS 7 and $\varphi_b$ is the zero-point fluctuation of the phase of the second mode b across the ATS 7, $E_J$ is the Josephson energy of the side junctions and $E_L$ is the inductive energy of a central inductance, $\varphi_\Sigma(t)$ corresponds to a common flux modulation of the two loops of the ATS 7 and $\varphi_\Delta(t)$ corresponds to a differential flux modulation of the two loops of the ATS 7. The former can be implemented by delivering electromagnetic radiations through flux lines of the ATS 7 out of phase, the latter can be implemented by delivering electromagnetic radiations through the two flux lines of the ATS 7 in phase.

Parametric pumping of the ATS 7 is typically done by pumping the common flux as pumping the differential flux merely displaces the modes coupled to the ATS 7. As an example, by pumping the common flux at the frequency $f_p = |2f_a - f_b|$, $\varphi_\Sigma(t) = \varepsilon_{2ph}\cos(2\pi f_p t)$, the non-linear resonant part of the Hamiltonian writes in the rotating frame: $H_{ATS} = (E_J\epsilon_{2ph}\varphi_a^2\varphi_b/2)*(a^2 b^\dagger + \text{h.c.})$, which is typically the two-to-one photon exchange Hamiltonian needed to engineer the two-photon stabilization.

When an external DC magnetic field is set such that a $0 \bmod 2\pi$ magnetic flux threads one of the loop and a $\pi \bmod 2\pi$ flux threads the other loop, it is ensured that the ATS Hamiltonian has its "sin-sin" form. For clarity, the set-up applying the external DC magnetic field is not drawn on Figure 1 but can be applied via the two bottom mutual inductances of the ATS 7. A typical implementation consists in interleaving a bias-tee connected to a DC current source to input DC current into the system while letting the electromagnetic radiations go through. As will be described below, the components which generate the required magnetic fields are current-carrying flux bias lines close to the ATS 7.

The cat-qubit-hosting structure 6 comprises a further signal generator in the form of an electromagnetic source 17 which is set-up to modulate the common flux in the ATS 7. For this purpose, a electromagnetic network 19 is used to split the radiation emitted by the electromagnetic source 17 and apply it to each node of the ATS 7 with the correct phase. Alternatively, two different electromagnetic sources could be used, each being simply coupled to a single node of the ATS 7 and their relative phase and amplitude being set so as to achieve the desired flux modulation.

When the electromagnetic source 17 is set at the frequency $|2f_a - f_b|$, the non-linear superconducting quantum circuit 3 performs the 2-to-1 photon conversion between the first mode a and the second mode b. To convert this 2-to-1 photon conversion into two-photon dissipation, the second mode b is selectively coupled to a load 21 via a linear coupler 23 and a electromagnetic filter 25 configured as a band pass filter with a frequency $f_b$.

Alternatively, the electromagnetic filter 25 may be configured as a band stop filter at a frequency $f_a$ and may be placed in between, on the one hand, the external environment and, on the other hand, the first mode a and the second mode b to isolate the first mode a and thus prevent the first mode a from suffering additional losses coming from unwanted coupling to the load 21.

Alternatively, it may be configured as a low-pass (respectively high-pass) filter if $f_a > f_b$ (resp $f_b > f_a$). In other embodiments, the electromagnetic filter 25 can be omitted when coupling between the load 21 and substantially only the second mode b can be established. The skilled person thus understands that the first mode a has a high-quality factor while the second mode b has a low-quality factor.

As previously explained, the second mode b is driven at its resonant frequency $f_b$. This two-photon drive is performed by a electromagnetic source 13 set at frequency $f_b$.

In the above, the load 21 can be seen as part of the command circuit 5 of figure 2, while the linear coupler 23 and the electromagnetic filter 25 can be seen as part of the non-linear superconducting quantum circuit 3.

The command circuit 5 of cat-qubit-hosting structure 6 may further comprise signal-generators in the form of a electromagnetic source 11 and a electromagnetic source 27. In addition to stabilizing the cat qubit, the command circuit 5 also enables measurement an observable of the cat qubit or application of a quantum gate to the cat qubit.

The electromagnetic source 11 may be arranged to drive the first mode a by delivering electromagnetic radiation at the frequency $f_a$ to the linear electromagnetic network b/a. Such a drive of the first mode a causes the non-linear superconducting quantum circuit 3 to engineer a Hamiltonian Hz expressed as $H_z/\hbar = \epsilon_z a + \text{h. c.}$, where the complex rate $\epsilon_z$ results from the amplitude and phase of the drive of the first mode a.

An additional signal generator in the form of another electromagnetic source may be set-up, in addition to the electromagnetic source 17, to contribute to the modulation of the common flux in the ATS 7. The additional electromagnetic source may be arranged to deliver electromagnetic radiation for causing the non-linear superconducting quantum circuit 3 to engineer a Hamiltonian. For instance, such a Hamiltonian may yield a so-called longitudinal coupling term between the first mode a and the second mode b, which may be used to apply a Z gate.

The electromagnetic source 27 is set-up to modulate the differential flux in the ATS 7 through the electromagnetic network 19. The electromagnetic source 27 can be used to reduce spurious Hamiltonian terms induced by the additional electromagnetic source. It is to be noted that the electromagnetic network 19 is used for convenience but can be omitted and the electromagnetic source 27 and any additional electromagnetic source could be applied directly to both nodes of the ATS 7, their relative phase and amplitude being set so as to achieve the desired flux modulation.

For the sake of completeness, it may also be noted that the electromagnetic source 27 can be used, instead of the electromagnetic source 13, to deliver electromagnetic radiation at a frequency $f_b$ to the linear electromagnetic network b/a to drive the second mode b.

Typically, the circuit has flux lines through which radiation can be delivered to provide (and optionally modulate) the common flux (herein also referred to as $\varphi_\Sigma$ or "sigma flux") and provide (and optionally modulate) the differential flux (herein also referred to as $\varphi_\Delta$ or "delta flux"). These are generally referred to as the two bias modes. As such, the flux lines may deliver both a DC-bias (setting the working point described above by applying DC current to thread the ATS loops with the relevant magnetic fluxes) and an RF-bias (superposed modulation to permit the time-dependent magnetic flux terms to "pump" the ATS as discussed above).

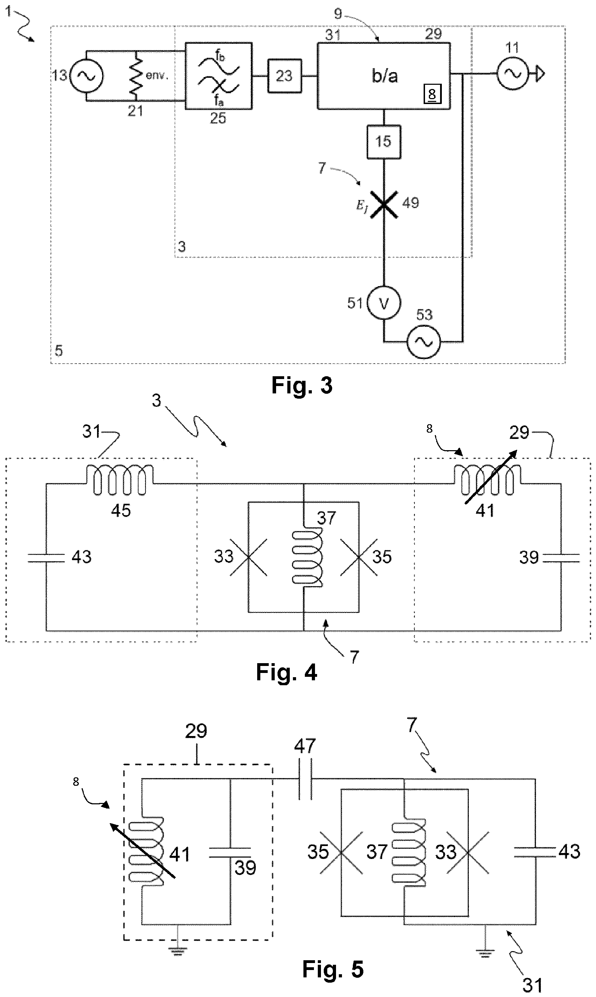

Figure 3 illustrates an embodiment in which the quantum system 1 is arranged to perform the DC dissipative stabilization to stabilize a cat qubit.

The non-linear element 7 is a set of one or more Josephson junctions. In the example of Figure 3, the non-linear element 7 includes only one Josephson junction 49 for the sake of simplification. Moreover, the resonator structure 9 includes a first resonant portion 29 and a second resonant portion 31 which confer the first mode a and the second mode b respectively to the non-linear superconducting quantum circuit 3. Compared to the quantum system 1 of Figure 2, the same reference signs have been kept for ease of understanding.

Compared to the quantum system 1 of figure 2, the command circuit 5 does not comprise anything functionally comparable to the two-photon pump 17, the electromagnetic network 19 nor electromagnetic radiation source 27. Instead, the command circuit 5 comprises the DC voltage source 51 and the electromagnetic radiation source 53 - which can be a microwave radiation source - to perform the 2-to-1 photon exchange between the first mode a and the second mode b.

The DC voltage source 51 is arranged to bias the non-linear element 7 with the delivered DC voltage having a value inducing an electromagnetic oscillation having a frequency substantially equal to $|2f_a - f_b|$ in the non-linear superconducting quantum circuit 3.

The electromagnetic radiation source 53 - which can be a microwave radiation source - is arranged to deliver electromagnetic radiation at a frequency substantially equal to the frequency of the electromagnetic oscillation induced by the DC voltage source 51 to cause injection locking thereof. Such an injection locking is particularly useful when the DC voltage source 51 is not an ideal DC voltage source, i.e. when the DC voltage source 51 induces voltage noise.

The DC dissipative stabilization is only one of the stabilization schemes concerned by the invention; consequently, the principle of the DC dissipative stabilization is explained briefly below.

The DC voltage source 51 delivers a constant voltage $V_{DC}$ across the Josephson junction 49. The phase of the Josephson junction 49 is denoted $\varphi_J$. At this stage, for simplicity, we can consider that the DC voltage source 13 is ideal, which means that the operation of the DC voltage source 51 does not generate voltage noise. An ideal DC voltage source can itself be made with a Josephson junction.

The Cooper pairs - also known as BCS pairs (Bardeen-Cooper-Schrieffer pairs) -, which are pairs of electrons bound together at low temperatures, travel the circuit with an energy equal to $2eV_{DC}$, where $e$ is the elementary charge. In the environment set up by the Josephson junction 49, such an energy $2eV_{DC}$ is converted into photons with an angular frequency $\omega_{DC}$ equal to $2eV_{DC}/\hbar$ . It can thus be considered that the Josephson junction 49 acts as a "voltage-to-frequency converter". Consequently, the equation of motion can be described with the following differential equation:

$$\dot{\varphi}_J = \frac{2e}{\hbar} V_{DC} = \omega_{DC} \;.$$

Since the DC voltage $V_{DC}$ is constant over the time, the time evolution of the phase $\varphi_J$ can be expressed as follows: $\varphi_J(t) = \omega_{DC}t + \varphi_{J0}$, where: $\varphi_{J0}$ is the initial value of the phase $\varphi_J$, $\varphi_{J0} = \varphi_J(0)$. The phase $\varphi_J$ thus varies linearly with time.

Nonetheless, the non-linear superconducting quantum circuit 3 of the quantum system 1 further comprises, in addition to the Josephson junction 49, the first resonant portion 27 corresponding to the memory mode a having a zero-point phase fluctuation $\varphi_a$ as well as the second resonant portion 29 corresponding to the buffer mode b having a zero-point phase fluctuation $\varphi_b$.

The value $V_{DC}$ of the DC voltage induces an electromagnetic oscillation having an angular frequency $\omega_{DC}$ such that $\omega_{DC} = \frac{2e}{\hbar} V_{DC}$. Yet, since the DC voltage source 13 is intended to perform the 2-to-1 photon exchange which is for instance obtained with parametric pumping at a frequency $|2f_a - f_b|$ in the embodiment of Figure 2, the value $V_{DC}$ must be set such that the frequency $f_{DC}$ is equal to $|2f_a - f_b|$. Therefore: $f_{DC} = \omega_{DC}/2\pi = (1/2\pi)(2e/\hbar)V_{DC}$. Then, since the reduced Planck constant $\hbar$ is defined as $\hbar = h/2\pi$, we have $f_{DC} = (2e/h)V_{DC} = |2f_a - f_b|$. Thus, $V_{DC} = |2f_a - f_b|(h/2e)$.

The DC dissipative stabilization allows to obtain a two-photon coupling rate which is not determined - and thus limited - by the amplitude of any parametric pump: $g_2 = (E_J/4)\varphi_a^2\varphi_b$, where $E_J$ is the Josephson energy of the Josephson junction 49.

In the case where the non-linear element 7 includes N Josephson junctions, where N is a strictly positive natural number, the value $V_{DC}$ of the DC voltage in order to induce an electromagnetic oscillation having a frequency substantially equal to $|2f_a - f_b|$ in the non-linear superconducting quantum circuit 3 is the following: $V_{DC} = N|2f_a - f_b|(h/2e)$.

Figure 4 illustrates an electrical equivalent diagram of an embodiment of the non-linear superconducting quantum circuit 3 which takes the form of a galvanic circuit. Such electrical equivalent diagram is partial since it only represents the ATS 7 and a first resonant portion 29 and a second resonant portion 31 of the resonator structure 9 (and thus do not represent many of the other elements, e.g., neither the linear coupler 23 nor the electromagnetic filter 25 described in more detail below in reference to Figure 2). Both the first resonant portion 29 and the second resonant portion 31 are galvanically coupled to the ATS 7. The first resonant portion 29 confers the memory mode a having the resonant frequency $f_a$ to the non-linear superconducting quantum circuit 3, while the second resonant portion 31 confers the buffer mode b having the resonant frequency $f_b$ to the non-linear superconducting quantum circuit 3.

By "galvanically coupled", it should be understood here that there are short electrically conducting portions which connect the first resonant portion 29 and the second resonant portion 31 to the ATS 7, i.e., a short electrically conducting track or any other mean ensuring a physically continuous conducting junction. The expression "short" means that the electrically conducting track has an impedance which is negligeable compared to the impedance of the ATS 7, as well as the first resonant portion 29 and the second resonant portion 31 at the resonant frequencies $f_a$ and $f_b$ respectively. These short electrically conducting portions correspond to the linear coupler 15.

In Figure 4, the first resonant portion 29 includes a capacitive element 39 and an inductive element 41 which are connected in series. Similarly, the second resonant portion 31 includes a capacitive element 43 and an inductive element 45 which are connected in series. Crucially here, the inductive element 41 of the first resonant portion is a tunable inductor 8, as described in more detail below. Thus, by tuning the inductance of the inductive element 41, the resonant frequency associated with the first resonant portion 29 can itself be tuned.

The (non-tunable) inductive and capacitive elements described in relation to Figure 4 could be realized as substantially distinct "lumped" elements, e.g. a geometric inductor or chain of Josephson junctions could provide the inductive element, whereas two conducting elements separated by a distance could provide the capacitive element (e.g. two conducting pads facing each other in 3D, or a conductive island surrounded by a ground plane in 2D). Alternatively, the inductive and capacitive elements could be provided together in a single superconducting resonator such as a co-planar wave guide or 3D extruded cavity such that the structure of the resonator inherently provides the inductive and capacitive qualities. The skilled person would be well aware of how to determine the inductive and capacitive qualities of a structure in a superconducting circuit, e.g. via finite-element modelling, or electromagnetic scattering matrix simulations, or experimental spectroscopy.

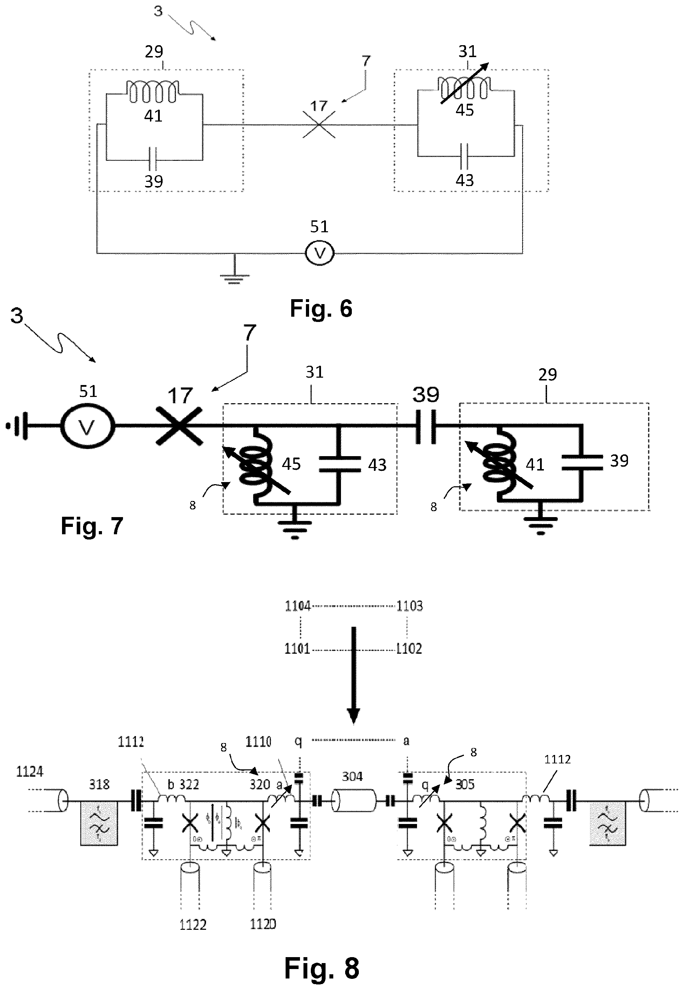

Figure 6 illustrates an electrical equivalent diagram of an embodiment of the non-linear superconducting quantum circuit 3 which takes the form of a capacitive circuit. Again, such an electrical equivalent diagram is partial since it does not represent many of the other features of the system.

The first resonant portion 29 is capacitively coupled to the second resonant portion 31. More particularly, the first resonant portion 29 and the second resonant portion 31 are coupled together via a capacitive element 47.

The capacitive circuit can be described as "minimal" in that it involves as few elements as possible to have the memory mode a and the buffer mode b: two capacitive elements 39 and 43 and two inductive elements 41 and 7. That is, the ATS 7 takes the place of the inductive element for the second resonant portion 31.

Similar to Figure 4, here the inductive element 41 of the first resonant portion is a tunable inductor 8, to thereby control the first resonant frequency with the tunable inductance.

Figure 5 illustrates an electrical equivalent diagram of an embodiment of the quantum system 1 of Figure 3 which takes the form of a galvanic circuit. Such an electrical equivalent diagram is again partial. It should also be noted that the means for injection locking is also ignored here.

As in Figure 3, the non-linear element 7 comprises only one Josephson junction 17. The linear microwave network b/a includes a first resonant portion 29 and a second resonant portion 31.

Both the first resonant portion 29 and the second resonant portion 31 are galvanically coupled to the Josephson junction 17. The first resonant portion 29 confers the first mode a having the resonant frequency to the non-linear superconducting quantum circuit 3 while the second resonant portion 31 confers the second mode b having the resonant frequency to the non-linear superconducting quantum circuit 3.

By "galvanically coupled", it should be understood here that there are short electrically conducting portions which connect the first resonant portion 27 and the second resonant portion 29 to the Josephson junction 17, i.e., a short electrically conducting track or any other mean ensuring a physically continuous conducting junction. The expression "short" means that the electrically conducting track has an impedance which is negligeable compared to the impedance of the Josephson junction 17, the first resonant portion 29 and the second resonant portion 31 at the resonant respective frequencies. These short electrically conducting portions correspond to the linear coupler 15 of Figure 3.

In Figure 6, it is inductive element 45 of the second resonant portion 31 which is a tunable inductor 8, and thus it is the second resonant frequency which can be tuned.

Figure 7 illustrates an electrical equivalent diagram of an embodiment of the quantum system 1 of Figure 3 which takes the form of a capacitive circuit, the electrical equivalent diagram again being only partial.

Here, the first resonant portion 29 is strongly capacitively coupled to the Josephson junction 17 through a capacitive element 39, whereas the second resonant portion 31 is galvanically coupled to the Josephson junction 17. The capacitive element 39 and the short electrically conducting portion connecting respectively the first resonant portion 29 and the second resonant portion 31 to the Josephson junction 17 correspond to the linear coupler 15 of Figure 3.

It must also be noted that the second resonant portion 31 can also be capacitively coupled to the Josephson junction 17, whether the first resonant portion 27 and the Josephson junction 17 are galvanically or capacitively coupled.

In Figure 7, both the inductive element 41 of the first resonant portion 29 is a tunable inductor 8 and the inductive element 45 of the second resonant portion 31 is a tunable inductor 8, such that both the first and second resonant frequencies can be controlled by the tunable inductances.

Figure 8 shows an example circuit coupling four dissipatively stabilized cat qubits (for simplicity here, each is shown parametrically stabilized by an ATS, although other 4WM nonlinear elements may be used instead of the ATS, such as a parametrically pumped JJ or a DC-biased JJ etc.).

In this non-limiting exemplary implementation four dissipative cat qubits 1101, 1102, 1103 and 1104 with similar parameters are laid on a superconducting chip in circular pattern with nearest neighbor connection.

This is a partial schematic version of the practical implementation. In this schematic, the choice has been made to make 1101 and 1103 the two data cat qubits and 1102 or 1104 the ancilla cat qubit for readability, hence the labels "a" and "q". By referring to "data" and "ancilla" cat qubits, it is understood that the circuit of Figure 8 could be configured to run a repetition error-correcting code. Both the data and the ancilla cat qubits are dissipative cat qubits. The circuit has a capacitive bus coupling 304 between the data 1101 and the ancilla 1102 qubit modes. The microwave radiation sources are not represented but the CPW (co-planar waveguide) transmission lines that connect the circuit to the outside rest of the quantum system are represented 1120, 1122, 1124. The lines 1120, 1122 are responsible for the DC current bias and the parametric flux modulation of the ATS 308, the first one addressing mostly the right loop and the second one addressing mostly le left loop. By pumping any linear combination of both, the control circuit can pump $\phi_\Sigma$ or $\phi_\Delta$ The line 1124 is connecting the buffer to a 50$\Omega$ environment to enable losses and drive. The ancilla qubit 1102 have the same input transmission lines.

In particular, the second resonant portion 322 of data cat quit 1101 comprises a non-tunable inductor 1112, whereas the first resonant portion 320 of data cat qubit 1101 comprises an inductor 1110 which is a tunable inductor 8. Similarly, the second resonant portion of ancilla cat quit 1102 comprises a non-tunable inductor 1112, whereas the first resonant portion 305 of ancilla cat qubit 1102 comprises an inductor which is a tunable inductor 8.

Thus, the frequencies of the data cat qubit 1101 and the ancilla cat qubit 1102 may respectively be controlled and detuned from one another *in situ* in order to selectively address each mode with the radiation and not having the modes delocalized over the entire circuit).

CNOT gates may be implemented using the dissipatively stabilized data cat qubit 1101 and the dissipatively stabilized ancilla cat qubit, as disclosed in EP23305298 filed 06 March 2023, or as disclosed in Gautier, Ronan, Alain Sarlette, and Mazyar Mirrahimi. "Combined dissipative and hamiltonian confinement of cat qubits." PRX Quantum 3.2 (2022): 020339; or in Guillaud, Jérémie, and Mazyar Mirrahimi. "Repetition cat qubits for fault-tolerant quantum computation." Physical Review X 9.4 (2019): 041053.

The present invention enables tuning the frequencies of one or other of the cat qubits to be a different frequency during the implementation of the CNOT gate s opposed to before or after the CNOT gate when the cat qubits may be stabilized but idling at different frequencies. This is crucially enabled by using a tunable inductor 8, which moreover may be optimised for the cat qubit architecture.

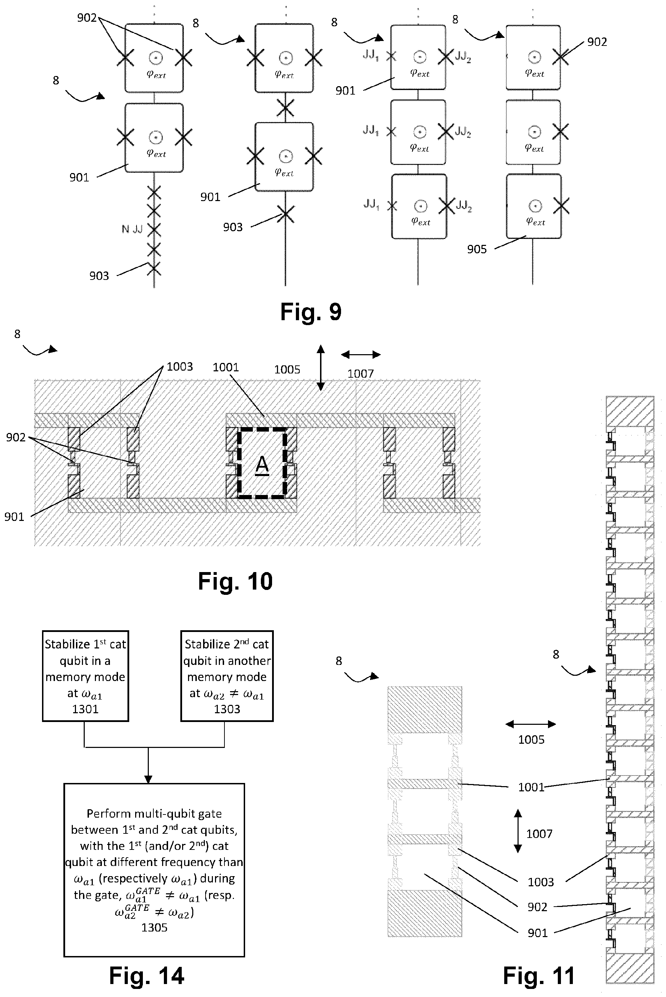

Figure 9 shows schematics of three different tunable inductors 8. The left-most panel shows a tunable inductor 8 comprised of two DC-SQUIDs connected in series. Each DC-SQUID is formed of two branches of superconducting material connected into a loop, wherein a Josephson junction 902 is provide in each branch. The tunable inductor 8 also comprises a linear array of Josephson junctions 903 connected in series.

The next panel to the right (i.e. second left-most panel) shows a tunable inductor 8 comprised of two DC SQUIDs connected in series, wherein a Josephon junction 903 is connected between the two DC-SQUIDs, as well as another Josephson junction 903 connected in series below.

The next panel to the right again (i.e. second right-most panel) shows a tunable inductor 8 comprised of three DC SQUIDs connected in series. Here, the Josephson energy of the Josephson junction in each branch of the DC-SQUID is different, such that there is an energy asymmetry, given by the difference between Josephson energies $\Delta E_J = E_{J,larger}$ - $E_{J,smaller}$ divided by the larger Josephson energy $\Delta E_J/E_{J,larger}$. This avoids the sharp divergence in frequency response of a symmetric DC-SQUID (equal Josephson energies in each branch) which occurs at specific magnetic flux values. Thus, using asymmetric DC-SQUIDs helps to reduce the sensitivity of the tunable inductor 8 to magnetic flux noise whilst maintaining suitable frequency tunability.

The right-most panel of Figure 9 shows a tunable inductor 8 comprised of three RF-SQUIDs 905 connected in series.

The inductance of the tunable inductor 8 is tuned by changing the flux threading each of the DC-SQUIDs or RF-SQUIDs, $\varphi_{ext}$, which is the same for each DC-SQUID or RF-SQUID. Accordingly, by using a plurality of flux-tunable non-linear elements as shown in the example tunable inductors 8 of Figure 9, the resonant portion comprising the tunable inductor 8 inherits frequency tunability from the tunable inductance, but with minimal non-linearity.

Figure 10 shows an example of an array of DC-SQUIDs 901 connected in series which may be used in embodiments of the present invention. Each of the three DC-SQUIDs 901 comprise two conducting branches each comprising a Josephson junction 902 formed by a Dolan bridge technique. Each Josephson junction 902 is connected to a superconducting pad 1001 on either side of the Josephson junction via superconducting leads, thereby forming the loop of the DC-SQUID 901.

The conducting leads 1003 each extend substantially in a direction 1005 perpendicular to the array axis 1007. To provide the DC-SQUIDs in series without detrimental effects of additional superconducting loop paths being created, the superconducting pads connecting adjacent DC-SQUIDs 901 are staggered in the direction 1005 to sequential pairs of DC-SQUIDs 901. For instance, the left-most and middle DC-SQUIDs are connected via a superconducting pad 1001 at the bottom (as viewed in Figure 10) to form the bottom parts of each DC-SQUID 901, whereas the middle and right-most DC-SQUIDs are connected via a superconducting pad 1001 at the top (as viewed in Figure 10) to form the top parts of each DC-SQUID 901 (i.e. the sides opposite to the bottom part). This avoids forming additional DC-SQUID loops which overlap and share the same Josephson junction branches.

The superconducting leads 1003 all have substantially the same length in the direction 1005. Moreover, the width of the superconducting pads 1001 in the direction 1005 are smaller than the length of the leads 1003 in the direction 1005. This has been found to be particularly effective in consistently fabricating the tunable inductor 8 when it is integrated with the rest of a superconducting non-linear circuit configured to stabilze cat qubits, e.g.without collapsing the Josephson junctions 902. In particular, this design is compatible with fabrication of other delicate non-linear element structural features in the circuit such as ATSs or other linear arrays of Josephson junctions.

The areas of the DC-SQUIDs, denoted by the dashed box and reference A in the middle DC-SQUID 901 of Figure 10 is around 180 micrometer$^2$. The area has been chosen to optimise the frequency tunability range to be particularly useful in stabilizing cat qubits in a planar superconducting architecture, whilst minimising flux noise (which grows with increasing area size).

Figure 11 shows examples of arrays of DC-SQUIDs 901 connected in series which may be used in embodiments of the present invention. The left panel shows an array formed from three DC-SQUIDs 901, whereas the right panel shows an array formed of fifteen DC-SQUIDs 901. The DC-SQUIDS are stacked in a ladder configuration, such that the branches, each formed of a pair of conducting leads 1003 either side of the Josephson junction 902, extend in the array axis 1007. Accordingly, the conducting pads 1001 are now the "rungs" of the ladder configuration and extend along the direction 1005 perpendicular to the array axis 1007, to thereby connect the two branches of each DC-SQUID 901 and thus close the loop of the DC-SQUID 901.

The design of the arrays shown in Figure 11 have been found to be particularly compact, and thus advantageously helps reduce the overall footprint of the entire superconducting nonlinear circuit configured to stabilize a cat qubit. Indeed, in the lefthand panel of Figure 11, the areas of each DC-SQUID 910 is around 100 micrometer$^2$.

As will be appreciated, by specifically using arrays of DC-SQUIDs, the present inventors have discovered that less than 1 MHz of Kerr non-linearity is induced to the associated resonant portion over the frequency range at which the resonant frequency is tunable with the inductance of the tunable, and in particular this can be brought down to less than 0.5 MHz, and specifically less than 0.2 MHz.

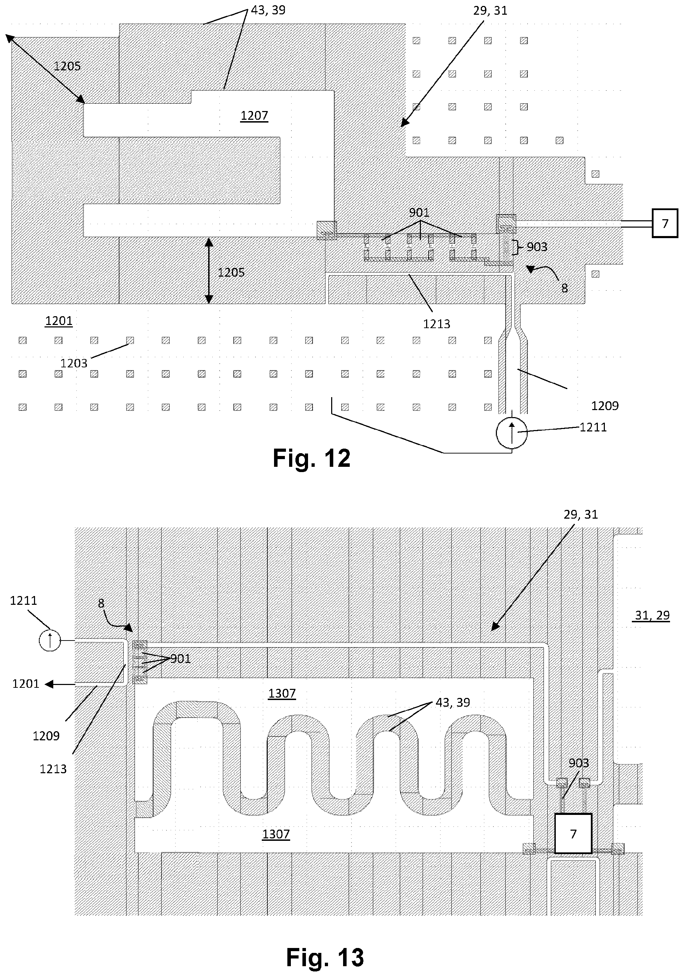

Figure 12 shows a resonant portion 29,31 comprising a tunable inductor 8 and a capacitor 43,39 which may be used in embodiments of the present invention. As will be appreciated, white material and dark grey shading denotes electrically conducting parts (formed from superconducting material and Josephson junctions), whereas light grey denote non-conducting regions. Specifically, the light grey areas show an underlying dielectric substrate upon which superconducting material is deposited. By etching or otherwise fabricating the non-linear superconducting circuit as known in the art, spacings may be formed between superconducting portions which expose the dielectric substrate as shown.

Thus, electrically conducting portions of the non-linear superconducting circuit are spatially isolated from the common ground plane 1201 by spacing 1205 formed by exposed portions of the dielectric substrate. The ground plane 1201 may be provided with holes 1203 exposing small portions of the dielectric substrate to thereby trap magnetic vortices.

In Figure 12, a single island conducting pad 1207 is provided, which has a backward C-like geometry. It will be appreciated that a wide array of alternative geometries could be used. The single island conducting pad 1207 together with the surrounding common ground plane 1201 together provide the capacitor 43,39 of the resonant portion 29,31. Namely, the spacing between the perimeter of the island and the closest parts of the ground plane 1201 plays an analogous role as the gap between the two plate of a conventional parallel plate capacitor.

The tunable inductor 8 comprises an array of DC-SQUIDs as shown in Figure 10, as well as a linear array of Josephson junctions 903 connected thereto in series. One end of the tunable inductor 8 is galvanically connected to the single island conducting pad 1207, and the other end of the tunable inductor 8 is galvanically connected to the non-linear element 7 of the circuit responsible for the non-linear wave mixing between the modes needed to stabilize a cat qubit (shown schematically on the right-hand side of Figure 12).

Thus, the capacitor 43,39 (defined by the single island conducting pad 1207 and the surrounding ground plane 1201) and the tunable inductor 8 together provide the resonant portion 29,31 resulting in a resonant frequency which is tunable with the inductance of the inductor 8. Here, a flux line 1209 is provided in the form of a co-planar waveguide. One end is connected to a DC current source 211 whereas the other end returns to ground via the common ground plane 1201. A portion of the flux line 1209 passes adjacent to the DC SQUIDs 901, such that a direct current flowing through the flux line 1209 generates a magnetic field which threads each of the DC-SQUIDs with the same magnetic flux. By changing the DC current, the threaded magnetic flux changes, thereby tuning the inductance of the tunable inductor 8 and accordingly the resonant frequency of the associated 29,31.

Figure 13 shows a resonant portion 29,31 comprising a tunable inductor 8 and a capacitor 43,39 which may be used in embodiments of the present invention. As with Figure 12, white material and dark grey shading denotes electrically conducting parts (formed from superconducting material and Josephson junctions), whereas light grey denote non-conducting regions. The surrounding common ground plane 1201 is further away from the features shown in Figure 13 and is thus not visible.

In Figure 13, a differential resonator is provided formed of a pair of electrically conducting portions in the form of adjacent conducting pads 1307 which together provide the capacitor 43,39. Here, the adjacent conducting pads together interlace in to form a substantially rectangular geometry having a meandering spacing (exposing the dielectric substrate underneath) provided therebetween from one end of the rectangular shape to the other to delimit the pair of adjacent conducting pads 1307. It will be appreciated that a wide array of alternative geometries could be used. Here, the spacing between the pair of adjacent conducting pads 1307 plays an analogous role as the gap between the two plate of a conventional parallel plate capacitor.

The tunable inductor 8 comprises an array of DC-SQUIDs as shown in the lefthand panel of Figure 11, as well as a single Josephson junctions 903 connected thereto in series. One end of the tunable inductor 8 is galvanically connected to one of the adjacent conducting pads 1307, and the other end of the tunable inductor 8 is galvanically connected to the non-linear element 7 of the circuit responsible for the non-linear wave mixing between the modes needed to stabilize a cat qubit (again shown schematically). Here, the other of the adjacent conducting pads 1307 is also connected galvanically to the non-linear element.

Thus, the capacitor 43,39 (defined by the adjacent conducting pads 1307) and the tunable inductor 8 together provide the resonant portion 29,31 resulting in a resonant frequency which is tunable with the inductance of the tunable inductor 8. On the right-hand side of Figure 13, a small amount of the conducting portions of the other resonant portion 31,29 is shown, for instance galvanically connected to the non-linear element 7.

A flux line 1209 is again provided to magnetic flux bias the DC-SQUIDS 901.

Given that the array of SQUIDs (be they DC-SQUIDs 901, RF-SQUIDs 905, or something else such as SNAILs) will typically be aligned along an array axis 1005, the portion of the flux line 1209 passing adjacent to the array of SQUIDs 901 may preferably be linear (identified as linear portion 1213) and parallel with the array axis 1005. This thus enables substantially the same magnetic flux be threaded through each of the SQUIDs of the array, thereby uniformly controlling the inductance with minimum additional noise. This is shown in both Figures 12 and 13, wherein there is a linear portion 1213 of the flux line 1209 passing adjacent to the array of DC-SQUIDs 901. The present Inventors have found that the linear portion 1213 is advantageously positioned at a distance away from the closest part of the array of SQUIDs, measured in the direction perpendicular to the array axis 1005 (which the linear portion 1213 is parallel with), of between 1 micrometers and 20 micrometers from the SQUIDs.

Figure 14 shows an example of a method which may be applied by command circuit 5 to the superconducting non-linear circuit of Figures 1 and 8. In an operation 1301, the command circuit 5 may stabilize a first cat qubit in a first memory mode at a first resonant frequency $\omega_{a1}$. Simultaneously, or at some period of time thereafter, in an operation 1303, the command circuit 5 may stabilize a second cat qubit in a second memory mode at a second resonant frequency $\omega_{a2}$, wherein the command circuit 5 controls the tunable inductor corresponding to the first memory mode and/or the tunable inductor corresponding to the second memory mode such that the second resonant frequency $\omega_{a2}$ is different to the first resonant frequency $\omega_{a1} \neq \omega_{a2}$.

Optionally, in an operation 1305, the command circuit 5 may engineer an interaction between the first cat qubit and the second cat qubit mediated by the coupling element 4,304, such that a multi-qubit quantum gate is applied to the first and second cat qubits, such as a CNOT gate. In particular, at least one of the first and second cat qubits is stabilized at an initial frequency from operations 1303 and 1305 prior to applying the multi-qubit gate and then, via suitably tuning the corresponding tunable inductor 8, is at an operation frequency, different to the initial frequency, during the application of the multi-qubit quantum gate.

As will be appreciated, other multi-qubit quantum gates, such as a Toffoli gate between or multi-qubit CNOT or other gates may be implemented involving two or more cat qubit-hosting structures 6 or quantum system 1.

## Claims

1. Non-linear superconducting circuit for stabilizing at least one cat qubit, the non-linear superconducting circuit comprising:

   a four-wave mixing non-linear element;
   a first resonant portion; and
   a second resonant portion which is coupled to the first resonant portion via the four-wave mixing non-linear element;
   wherein the first resonant portion, the second resonant portion, and the four-wave mixing non-linear element are configured together to provide a first physical oscillatory mode (a) with a first resonant frequency for hosting a cat qubit and a second physical oscillatory mode (b) with a second resonant frequency which is more dissipative than the first physical oscillatory mode (a); and
   wherein at least one of the first and second resonant portions comprises a tunable inductor and a capacitor such that at least one of the first and second resonant frequencies are tunable with the inductance of the tunable inductor.

2. The non-linear superconducting circuit of claim 1, wherein the four-wave mixing element is one of: an asymmetrically threaded superconducting quantum interference device (ATS) or a DC-voltage-biased non-linear element.

3. The non-linear superconducting circuit of any preceding claim, wherein the tunable inductor comprises two or more superconducting quantum interference devices (SQUIDs) connected in series, optionally wherein each of the SQUIDS is a DC-SQUID comprised of a pair of Josephson junctions connected in parallel, wherein the Josephson energy of the pair of Josephson junctions is asymmetrical, and preferably wherein the energy asymmetry between the asymmetrical Josephson energies of the pair of Josephson junctions is greater than 50%, calculated from the difference between Josephson energies divided by the larger Josephson energy.

4. The non-linear superconducting circuit of claim 3, wherein the tunable inductor comprises five or more superconducting quantum interference devices (SQUIDs) connected in series.

5. The non-linear superconducting circuit of claims 3 or 4, wherein each SQUID comprises an area delimited by the conducting loop of the SQUID, wherein the area is between 50 micrometer$^2$ to 500 micrometer$^2$.

6. The non-linear superconducting circuit of any of claims 3-5, comprising a first flux line, wherein the first flux line is configured to conduct a direct current adjacent to the SQUIDs so as to thread substantially the same value of magnetic flux through each of the SQUIDs, and optionally wherein: (i) the closest portion of the first flux line to the SQUIDs is positioned at a distance of between 1 micrometers and 20 micrometers from the SQUIDs; and/or (ii) the first flux line

**EP 4 764 975 A1**

and the SQUIDS have a mutual inductance M of between 0.1 and 3 pH.

7. The non-linear superconducting circuit of any preceding claim, wherein the tunable inductor further comprises one or more Josephson junctions connected in series with the SQUIDs, optionally wherein:

(i) one or more Josephson junctions are connected in series between at least one pair of the SQUIDs which are adjacent; and/or
(ii) one or more Josephson junctions are provided as a linear array.

8. The non-linear superconducting circuit of any preceding claim, wherein the non-linear superconducting circuit lies on a dielectric substrate and electrically conducting portions of the non-linear superconducting circuit are spatially isolated from a common ground plane by spacings formed by exposed portions of the dielectric substrate that spatially separate the electrically conducting portions from the common ground plane;
wherein for the at least one of the resonant portions which comprises the tunable inductor and the capacitor, said resonant portion is comprised of:

(i) an electrically conducting portion in the form of a single island conducting pad which, together with the common ground plane, provides the capacitor; and
(ii) the tunable inductor galvanically connected to the single island conducting pad.

9. The non-linear superconducting circuit of any of claims 1-8, wherein the non-linear superconducting circuit lies on a dielectric substrate and electrically conducting portions of the non-linear superconducting circuit are spatially isolated from a common ground plane by spacings formed by exposed portions of the dielectric substrate that spatially separate the electrically conducting portions from the common ground plane;
wherein for the at least one of the resonant portions which comprises the tunable inductor and the capacitor, said resonant portion is comprised of:

(i) a differential resonator comprising a pair of electrically conducting portions in the form of adjacent conducting pads which together provides the capacitor; and
(ii) the tunable inductor galvanically connected to at least one of the adjacent conducting pads.

10. The non-linear superconducting circuit of any preceding claim, wherein: (I) the first resonant portion comprises the tunable inductor and the capacitor such that the first resonant frequency is tunable with the inductance of the tunable inductor; or (II) the second resonant portion comprises the tunable inductor and the capacitor such that the second resonant frequency is tunable with the inductance of the tunable inductor.

11. The non-linear superconducting circuit of claims 1-9, wherein the first resonant portion comprises a first tunable inductor and a first capacitor such that the first resonant frequency is tunable with the inductance of the first tunable inductor; and

wherein the second resonant portion comprises a second tunable inductor and a second capacitor such that the second resonant frequency is tunable with the inductance of the second tunable inductor;
wherein the first resonant frequency is tunable independently from the second resonant frequency.

12. The non-linear superconducting circuit of any preceding claim, further comprising:

a third resonant portion;
a fourth resonant portion which is coupled to the third resonant portion via either: (i) the four-wave mixing non-linear element, or (ii) another four-wave mixing non-linear element or a (2N+1)-wave mixing non-linear element wherein the third resonant portion, the fourth resonant portion, and said non-linear element coupling the third and fourth resonant portions are configured together to provide a third physical oscillatory mode ($a_2$) with a third resonant frequency for hosting a cat qubit and a fourth physical oscillatory mode ($b_2$) with a fourth resonant frequency which is more dissipative than the third physical oscillatory mode ($a_2$); and
wherein at least one of the third and fourth resonant portions comprises another tunable inductor and another capacitor such that at least one of the third and fourth resonant frequencies are tunable with the inductance of said another tunable inductor.

13. A quantum device, comprising:

a non-linear superconducting circuit according to one of the preceding claims; and
command circuit configured to apply one or more control signal(s) to the non-linear superconducting circuit, configured to engineer a 2N-to-1 boson exchange between the first and second physical oscillatory modes mediated by the four-wave mixing non-linear element; wherein
the command circuit is further configured to apply one or more control signal(s) to the tunable inductor such that at least one of the first and second resonant frequencies is tunable across a frequency range, optionally wherein the frequency range is at least 0.5 GHz.

**14.** A quantum device, comprising:

a non-linear superconducting circuit according to claim 12, the non-linear superconducting circuit further comprising a coupling element, wherein at least one of first and second is coupled to at least one of the third and fourth by the coupling element; and
a command circuit configured to apply:

(i) one or more first control signal(s) to the non-linear superconducting circuit, configured to engineer a 2N-to-1 boson exchange between the first and second physical oscillatory modes mediated by the four-wave mixing non-linear element, such that a first cat qubit is stabilized in the first physical oscillatory mode;
(ii) one or more second control signal(s) to the non-linear superconducting circuit, configured to engineer a 2N-to-1 boson exchange between the third and fourth physical oscillatory modes mediated by the four-wave mixing non-linear element, such that a second cat qubit is stabilized in the third physical oscillatory mode; and
(iii) one or more third control signal(s) to the tunable inductor, such that, in combination with the first, second, and third control signal(s), the first and second cat qubits are stabilized at different frequencies.

**15.** The quantum device according to claim 14, wherein the command circuit is configured to apply:
(iv) one or more fourth control signal(s) to the non-linear superconducting circuit, configured to engineer an interaction between the first cat qubit and the second cat qubit mediated by the coupling element such that a multi-qubit quantum gate is applied to the first and second cat qubits, wherein at least one of the first and second cat qubits is stabilized at an initial frequency prior to applying the multi-qubit gate and is at an operation frequency, different to the initial frequency, during the application of the multi-qubit quantum gate.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

Stabilize 1st cat qubit in a memory mode at $\omega_{a1}$
1301

Stabilize 2nd cat qubit in another memory mode at $\omega_{a2} \neq \omega_{a1}$
1303

Perform multi-qubit gate between 1st and 2nd cat qubits, with the 1st (and/or 2nd) cat qubit at different frequency than $\omega_{a1}$ (respectively $\omega_{a1}$) during the gate, $\omega_{a1}^{GATE} \neq \omega_{a1}$ (resp. $\omega_{a2}^{GATE} \neq \omega_{a2}$)
1305

**Fig. 14**

**Fig. 11**

**Fig. 12**

**Fig. 13**

Europäisches
Patentamt
European
Patent Office
Office européen
des brevets

# EUROPEAN SEARCH REPORT

**Application Number**

EP 24 30 7287

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 468 211 A1 (ALICE & BOB [FR]) 27 November 2024 (2024-11-27) * paragraph [0001] - paragraph [0018]; paragraph [0022] - [0131]; figures 1-7 * | 1-15 | INV. G06N10/40 G06N10/70 |
| Y | WO 2019/077399 A1 (IBM [US]; IBM UK [GB]; IBM CHINA INVESTMENT CO LTD [CN]) 25 April 2019 (2019-04-25) * paragraph [0001]; paragraph [0015] - paragraph [0028]; paragraph [0039] - paragraph [0076]; figure 1 * | 1-15 | |
| A | EP 4 207 005 A1 (ALICE & BOB [FR]) 5 July 2023 (2023-07-05) * paragraph [0003] - paragraph [0012]; paragraph [0014] - paragraph [0123]; figures 6-8 * | 1-15 | |

TECHNICAL FIELDS
SEARCHED (IPC)

G06N
H03K
H10N

The present search report has been drawn up for all claims

| Place of search | Date of completion of the search | Examiner |
|---|---|---|
| The Hague | 22 May 2025 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 7287

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | | | Publication date | Patent family member(s) | | | Publication date |
|---|---|---|---|---|---|---|---|
| EP 4468211 | A1 | | 27-11-2024 | EP | 4468211 | A1 | 27-11-2024 |
| | | | | WO | 2024240381 | A1 | 28-11-2024 |
| WO 2019077399 | A1 | | 25-04-2019 | CN | 111108687 | A | 05-05-2020 |
| | | | | DE | 112017007873 | T5 | 07-05-2020 |
| | | | | GB | 2581449 | A | 19-08-2020 |
| | | | | JP | 6941230 | B2 | 29-09-2021 |
| | | | | JP | 2021500737 | A | 07-01-2021 |
| | | | | US | 10235635 | B1 | 19-03-2019 |
| | | | | US | 2019156238 | A1 | 23-05-2019 |
| | | | | US | 2020050961 | A1 | 13-02-2020 |
| | | | | US | 2021110291 | A1 | 15-04-2021 |
| | | | | WO | 2019077399 | A1 | 25-04-2019 |
| EP 4207005 | A1 | | 05-07-2023 | CN | 118613809 | A | 06-09-2024 |
| | | | | EP | 4207005 | A1 | 05-07-2023 |
| | | | | IL | 314000 | A | 01-08-2024 |
| | | | | JP | 2025502859 | A | 28-01-2025 |
| | | | | KR | 20240131418 | A | 30-08-2024 |
| | | | | WO | 2023126497 | A1 | 06-07-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23175147
- EP 23306839
- EP 21306965
- EP 21306965 A

- EP 22306815
- EP 22306816
- EP 23305298 A

**Non-patent literature cited in the description**

- **LESCANNE, RAPHAËL et al.** Exponential suppression of bit-flips in a qubit encoded in an oscillator. *Nature Physics*, 2020, vol. 16 (5), 509-513
- **BERDOU, CAMILLE et al.** One hundred second bit-flip time in a two-photon dissipative oscillator. *PRX Quantum*, 2023, vol. 4 (2), 020350
- **RÉGLADE, ULYSSE et al.** Quantum control of a cat qubit with bit-flip times exceeding ten seconds. *Nature*, 2024, 1-6
- **PUTTERMAN, HARALD et al.** Preserving phase coherence and linearity in cat qubits with exponential bit-flip suppression. *arXiv:2409.17556*, 2024
- **PUTTERMAN, HARALD et al.** Hardware-efficient quantum error correction using concatenated bosonic qubits. *arXiv:2409.13025*, 2024
- **MIRRAHIMI, MAZYAR et al.** Dynamically protected cat-qubits: a new paradigm for universal quantum computation. *New Journal of Physics*, 2014, vol. 16 (4), 045014

- **P. ARRANGOIZ-ARRIOLA** ; **E. A. WOLLACK** ; **Z. WANG** ; **M. PECHAL** ; **W. JIANG** ; **T. P. MCKENNA** ; **J. D. WITMER** ; **R. VAN LAER** ; **A. H. SAFAVI-NAEINI'S WORK**. Resolving the energy levels of a nanomechanical oscillator. *Nature*, 2019, vol. 571, 537
- **KOUNALAKIS, MARIOS** ; **GERRIT EW BAUER** ; **YAROSLAV M. BLANTER**. Analog quantum control of magnonic cat states on a chip by a superconducting qubit. *Physical review letters*, 2022, vol. 129 (3), 037205
- **KOZIN, VALERII K. et al.** Quantum phase transitions and cat states in cavity-coupled quantum dots. *Physical review research*, 2024, vol. 6 (3), 033188
- **GAUTIER, RONAN** ; **ALAIN SARLETTE** ; **MAZYAR MIRRAHIMI**. Combined dissipative and hamiltonian confinement of cat qubits. *PRX Quantum*, 2022, vol. 3 (2), 020339
- **GUILLAUD, JÉRÉMIE** ; **MAZYAR MIRRAHIMI**. Repetition cat qubits for fault-tolerant quantum computation. *Physical Review X*, 2019, vol. 9 (4), 041053